# EUROPEAN PATENT APPLICATION

(11) **EP 3 258 630 A1**
(43) Date of publication of application: **20.12.2017**
(21) Application number: 17171260.7
(22) Date of filing: 16.05.2017
(51) Int. Cl.: H04L 1/00, H04L 12/815

(54) **COMMUNICATION CONTROL PROGRAM, COMMUNICATION CONTROL METHOD, AND COMMUNICATION CONTROL APPARATUS**

(30) Priority: 15.06.2016 JP 2016119202
(71) Applicant: Fujitsu Limited, Kawasaki-shi, Kanagawa 211-8588 (JP)
(72) Inventor: Mutoh, Ryoichi, Kanagawa, 211-8588 (JP); Oguchi, Naoki, Kanagawa, 211-8588 (JP)
(74) Representative: Hoffmann Eitle

(57) **Abstract**

A non-transitory computer-readable storage medium storing therein a communication control program for causing a computer to execute processing includes, executing a prescribed command at a specified transmission cycle, acquiring a start time at which the execution is started and an end time at which the execution is ended, performing the execution and the acquisition while changing the transmission cycle, and specifying a transmission cycle at which an error between a difference between the end time and the start time and the specified transmission cycle is within a prescribed range.

## Description

### FIELD

The present invention relates to a communication control program, a communication control method, and a communication control apparatus.

### BACKGROUND

Along with the use of large scale networks becoming increasingly widespread, events in which realization of prescribed throughput is not allowed when a large amount of data is transmitted/received tend to occur. One of the reasons for which such realization of prescribed throughput is not allowed is a difference in band between the networks.

When a large amount of data (packets) is transmitted to a relay apparatus connected to a network having a narrow band, the buffer of the relay apparatus overflows, causing a loss in packets (hereinafter also called packet loss or packet drop). When data is transmitted according to a Transmission Control Protocol/Internet Protocol (TCP/IP), packets are retransmitted as the packets are lost. The occurrence of the retransmission of the packets results in a reduction in throughput.

In this regard, for the purpose of reducing the occurrence of the loss of packets, there has been known a method for controlling a transmission rate on the side of a communication control apparatus at the transmission of data. By setting an upper limit on the amount of data to be transmitted per unit time, the communication control apparatus controls the transmission rate. When the transmission rate is controlled, the amount of data to be transmitted to a relay apparatus is limited, leading to a reduction in the occurrence of the loss of the packets.

For example, the communication control apparatus places a transmission interval between the packets to control the transmission rate. At this time, the communication control apparatus measures the transmission interval according to, for example, the timer control of an operation system or the like.

Technologies for controlling networks are described in, for example, Japanese Laid-open Patent Publication No. 2012-5087, 2015-188186, and 2015-170948.

### SUMMARY

However, accuracy in measuring a short time with the timer control of the operation system is low. Thus, there is a case that the communication control apparatus is not allowed to measure the transmission interval with high accuracy. That is, an error occurs between the transmission interval and a measurement time measured according to the timer control. Thus, there is a case that the communication control apparatus is not allowed to realize the control of the transmission rate with high accuracy.

An aspect of the present disclosure has an object of providing a communication control program, a communication control method, and a communication control apparatus that realize the high-accuracy control of a transmission rate.

A non-transitory computer-readable storage medium storing therein a communication control program for causing a computer to execute processing includes, executing a prescribed command at a specified transmission cycle, acquiring a start time at which the execution is started and an end time at which the execution is ended, performing the execution and the acquisition while changing the transmission cycle, and specifying a transmission cycle at which an error between a difference between the end time and the start time and the specified transmission cycle is within a prescribed range.

### BRIEF DESCRIPTION OF DRAWINGS

FIG. 1 is a diagram illustrating an example of the configuration of an information processing system in the embodiment.
FIG. 2 is a diagram schematically describing an example of the control of a transmission rate.
FIG. 3 is a diagram schematically describing an example of the control of a transmission rate in a case in which a fluctuation occurs in a gap.
FIG. 4 is a flowchart describing the flow of the processing of the communication control apparatus 100 in the first embodiment.
FIG. 5 is a diagram schematically describing the communication control processing of the first embodiment.
FIG. 6 is a hardware configuration diagram of a communication control apparatus 100 (100a, 100b) in a second embodiment.
FIG. 7 is a diagram illustrating the function of the software of the communication control apparatus 100 illustrated in FIG. 6.
FIG. 8 is a diagram illustrating an example of the rate control table 122 illustrated in FIGS. 6 and 7.
FIG. 9 is a flowchart describing the flow of the processing of the communication control program 121 illustrated in FIGS. 6 and 7.
FIG. 10 is a diagram schematically describing the processing of step S21 of FIG. 9.
FIG. 11 is a flowchart describing the details of the processing of step S21 of FIG. 9.
FIG. 12 is a flowchart describing the details of the processing of step S24 of FIG. 9.
FIG. 13 is a diagram schematically describing the communication control processing of the third embodiment.
FIG. 14 is a hardware configuration diagram of the client apparatus 200 in the third embodiment.
FIG. 15 is a diagram illustrating the functions of the software of the communication control apparatus 100 and the client apparatus 200 in the third embodiment.
FIG. 16 is a flowchart describing the flow of the processing of the communication control program 121 of the communication control apparatus 100 illustrated in FIG. 15.
FIG. 17 is a sequence diagram of the processing (step S52 of FIG. 16) to measure an allowable burst size.
FIG. 18 is a diagram describing an example of the transmission and reception of measurement packets.
FIG. 19 is a flowchart describing the details of the processing of the transmission-side measurement module (allowable burst size measurement module) 134 of step S52 of FIG. 16.
FIG. 20 is a flowchart describing the details of the processing of the reception-side measurement module (allowable burst size measurement module) 232 of step S52 of FIG. 16.
FIG. 21 is a diagram describing an example of the rate control table 122x described in FIG. 15.
FIG. 22 is a flowchart describing the details of the processing of step S55 of FIG. 16.
FIG. 23 is a flowchart describing the details of the processing of step S87 of FIG. 22.
FIG. 24 is a diagram illustrating the transition of a transmission rate in a case in which burst data is transmitted for each transmission cycle st.
FIG. 25 is a diagram illustrating the transition of a transmission rate obtained when burst data is divided and transmitted for each transmission cycle st.
FIG. 26 is a flowchart describing the processing of a communication control program 121 of the communication control apparatus 100 in the fourth embodiment.

### DESCRIPTION OF EMBODIMENTS

Embodiments will be described hereinafter according to the drawings. However, it is noted that the technical scope is not limited to the embodiments described below, but covers the matters described in the claims and the equivalents thereof.

### (Configuration of Information Processing System)

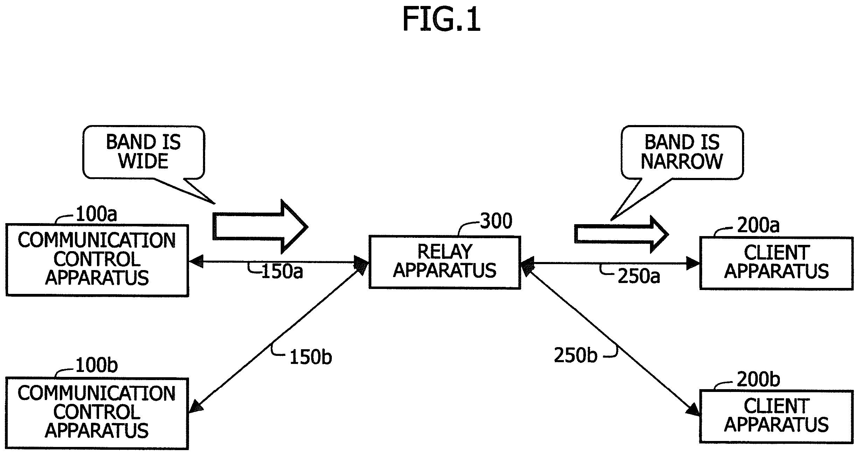

FIG. 1 is a diagram illustrating an example of the configuration of an information processing system in the embodiment. FIG. 1 exemplifies the information processing system having two communication control apparatuses 100a and 100b (hereinafter also called communication control apparatuses 100), one relay apparatus 300, and two client apparatuses 200a and 200b (hereinafter also called client apparatuses 200). The communication control apparatuses 100 are information processing apparatuses such as servers, for example. The relay apparatus 300 is, for example, a switch, a router, or the like.

Note that the number of the communication control apparatuses 100, the relay apparatuses 300, and the client apparatuses 200 (hereinafter also called respective apparatuses) is not limited to the example of FIG. 1. FIG. 1 illustrates a simple example for the purpose of illustration, but the information processing system has a multiplicity of the respective apparatuses.

FIG. 1 exemplifies a case in which the communication control apparatuses 100 transmit a large amount of data to the client apparatuses 200 through the relay apparatus 300. In the example of FIG. 1, the respective communication control apparatuses 100 are connected to the relay apparatus 300 through wire communication, and the relay apparatus 300 is connected to the respective client apparatuses 200 through wireless communication. The wireless communication has a narrower band than that of the wire communication.

The communication control apparatus 100a transmits data to the relay apparatus 300 according to a network 150a having a wide band and a fast line speed. Further, the relay apparatus 300 transmits data to the client apparatus 200a according to a network 250a having a narrow band and a slow line speed.

The relay apparatus 300 has a buffer that temporarily retains data to compensate for a difference in the line speed between a transmission side and a reception side. The buffer of the relay apparatus 300 is also shared with other networks 150b and 250b. Accordingly, when a large amount of data is transmitted to the relay apparatus 300, the buffer of the relay apparatus 300 may overflow. The overflow of the buffer causes the loss of packets including data (hereinafter also called packet loss or packet drop).

Further, when communication is performed according to a Transmission Control Protocol (TCP), packets are retransmitted as the loss of the packets occurs. When the retransmission of packets is frequently performed, the throughput of an application program (not illustrated in FIG. 1) that uses data reduces.

In order to reduce the occurrence of the loss of packets, the communication control apparatus 100a controls the transmission rate of data. The transmission rate indicates the amount of data to be transmitted per unit time. The communication control apparatus 100a controls the amount of data to be transmitted per unit time at the transmission of packets, an entrance to the line, or the like. Thus, the amount of data (packets) to be transmitted to the relay apparatus 300 is limited, whereby a reduction in the overflow of the buffer of the relay apparatus 300 is made possible. Accordingly, the communication control apparatus 100a is allowed to reduce the occurrence of the loss of packets.

Note that FIG. 1 exemplifies the case in which the communication control apparatuses 100 and the relay apparatus 300 are connected to each other through the wire communication and the relay apparatus 300 and the client apparatuses 200 are connected to each other through the wireless communication. However, the information processing system is not limited to the example, but the respective apparatuses may be connected to each other through wire communication having different bands.

### (Control of Transmission Rate)

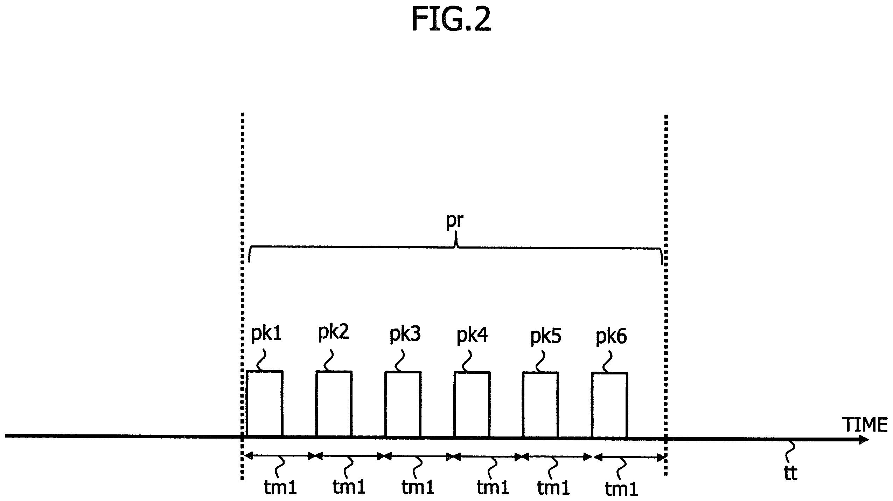

FIG. 2 is a diagram schematically describing an example of the control of a transmission rate. An arrow tt illustrated in FIG. 2 indicates the elapse of a time, and rectangles pk1 to pk6 (hereinafter also called packets pk) illustrated in FIG. 2 indicate respective packets.

For example, a communication control apparatus places a gap for each packet to be transmitted to set an upper limit on a transmission rate. The gap is a transmission interval. That is, the communication control apparatus places a transmission interval between packets to be transmitted to set an upper limit on the amount of data to be transmitted per unit time.

The communication control apparatus transmits each of the packets pk1 to pk6 with a certain transmission interval tm1 placed therebetween to control a transmission rate. The communication control apparatus sets the transmission interval tm1 between the packets so as to make the transmission rate a desired one. Specifically, the communication control apparatus sets the transmission interval tm1 so as to make the amount of data to be transmitted in a prescribed period pr and the desired transmission rate match each other.

Meanwhile, demand for network functions virtualization (NFV) and cloud computing to virtualize the functions of networks has been increased. Thus, there have been many cases in which software controls a transmission rate. When controlling a transmission rate, software measures a transmission interval tm1 according to, for example, a command to perform timer processing.

The command to perform the timer processing is, for example, a command to perform prescribed processing for a specified time. The embodiment exemplifies a sleep function as the command to perform the timer processing. The sleep function is a command to control the process of a calling source to be stopped for a specified time. Note that besides the sleep function, a usleep function, a nanosleep function, a function to control a process to be on standby for a specified time, or the like is available as the command to perform the timer processing.

The control of the command to perform the timer processing depends on the timer control of an operation system. Further, the operation system performs the timer control based on a timer interrupt. Thus, the command to perform the timer processing is not allowed to control a process at a cycle shorter than a cycle at which the timer interrupt occurs.

Accordingly, when a time shorter than the cycle at which the timer interrupt occurs is specified in the sleep function, the state of the process is not controlled according to the specified time. That is, a time during which the process is controlled to be stopped may become longer than the time specified in the sleep function.

On the other hand, even when a time longer than the cycle at which the timer interrupt occurs is specified in the sleep function, there is a case that the state of the process is not allowed to be controlled according to the specified time. The process management scheduler of the operation system allocates resources to the process according to a prescribed algorithm. Accordingly, the time during which the process is controlled to be stopped may become longer or shorter than the time specified in the sleep function according to the process management scheduler.

As described above, since the control of the command to perform the timer processing depends on the timer control of the operation system, there is a case that the process is not allowed to be controlled according to the time specified in the command. Thus, the software is not allowed to measure an accurate transmission interval according to the command to perform the timer processing.

A case in which a transmission rate is "1 gigabits per second (Gbps)" and the number of packets to be transmitted per unit time is "1.5 Mega packets per second (Mpps)" will exemplified. In this case, software needs to control one packet at a processing time of "about 7 microseconds (us) or less." Accordingly, the gap placed between the packets is "7 us" or less.

A cycle at which a timer interrupt occurs in Windows 7 (registered trademark) is, for example, "1 millisecond (ms)." Therefore, Windows 7 is not allowed to measure "7 us." Further, a cycle at which a timer interrupt occurs in Linux (registered trademark) is "4 us." Although the cycle at which the timer interrupt occurs in Linux "4 us" is shorter than the processing time "7 us," Linux is not necessarily allowed to measure "7 us."

As described above, when a short time is specified in a command to perform timer processing, there is a case that the state of a process is not allowed to be controlled according to the specified time. That is, an error may occur between a time specified in a command and a time at which a process is controlled according to the command. In addition, an error may be different every time a transmission interval is measured. That is, a fluctuation occurs in the gap.

### (Fluctuation in Gap)

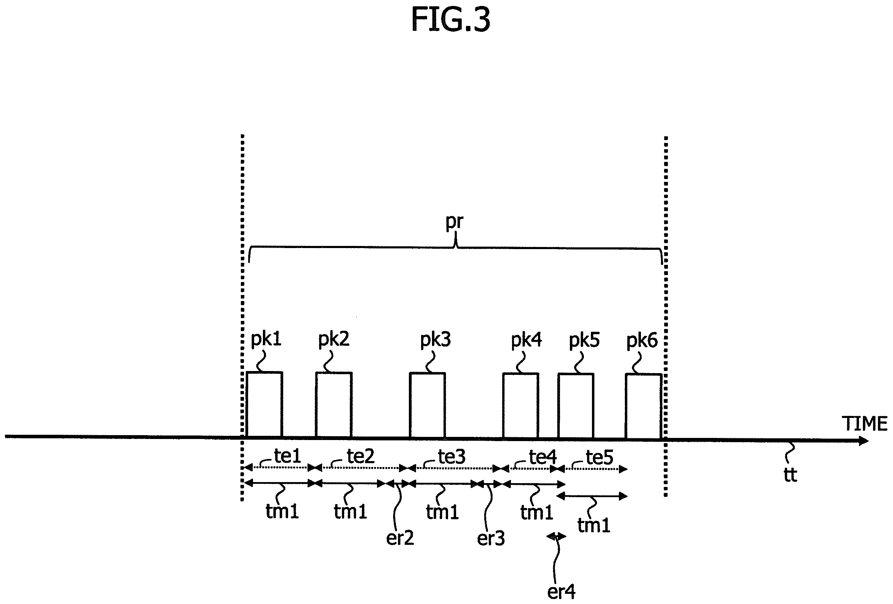

FIG. 3 is a diagram schematically describing an example of the control of a transmission rate in a case in which a fluctuation occurs in a gap. In FIG. 3, the same constituents as those illustrated in FIG. 2 are denoted by the same symbols.

FIG. 3 exemplifies a case in which a packet is transmitted for each transmission interval tm1 like the example of FIG. 2. In FIG. 3, each of solid arrows tm1 indicates a transmission interval specified in a sleep function, and each of dashed arrows te1 to te5 indicates a time (hereinafter also called a measurement time) controlled to be stopped according to the sleep function. Further, arrows er2 to er4 indicate the differences (errors) between the transmission interval tm1 and the measurement times te1 to te4.

In the example of FIG. 3, the transmission interval tm1 and the measurement time te1 between packets pk1 and pk2 are the same. Further, the transmission interval tm1 and the measurement time te5 between packets pk5 and pk6 are the same. On the other hand, since the measurement time te2 between the packet pk2 and a packet pk3 is longer than the transmission interval tm1, an error er2 exists. Similarly, since the measurement time te3 between the packet pk3 and a packet pk4 is longer than the transmission interval tm1, an error er3 exists. Further, the errors er2 and er3 are different.

When a state in which the measurement times te2 and te3 are longer than the transmission interval tm1 continues, the number of the packets to be transmitted in a prescribed period pr reduces compared with the example of FIG. 2, which results in a reduction in a transmission rate. Therefore, it is assumed to temporarily shorten the transmission interval to control the transmission rate to be a desired one. In this case, however, since the transmission rate increases, the buffer of the relay apparatus may overflow to cause the occurrence of the loss of the packets.

Further, as in FIG. 3, the measurement time te4 between the packets pk4 and pk5 may be shorter than the transmission interval tm1. When a state in which the measurement time te4 is shorter than the transmission interval tm1 continues, the number of the packets to be transmitted in the period pr increases compared with the case of FIG. 2, which results in an increase in the transmission rate. Since the transmission rate increases, the buffer of the relay apparatus may overflow to cause the occurrence of the loss of the packets.

When controlling the transmission rate as described above, software is not allowed to measure the transmission interval tm1 with high accuracy since accuracy in a command to perform timer processing is low. Thus, according to the example of FIG. 3, the errors er2 to er4 are different between the transmission intervals. Accordingly, even if the transmission interval tm1 is uniformly changed, it is not easy to control the transmission rate to be a desired one.

### (Idle Loop Processing)

Meanwhile, in order to measure a transmission interval, idle loop processing is available instead of a command to perform timer processing such as a sleep function. The loop processing is processing that uses a command to instruct repeat processing such as a "for sentence" and a "while sentence." For example, software repeatedly performs the loop processing while acquiring a current time, and ends the loop processing when a transmission interval tm1 has elapsed. Thus, the software measures the transmission interval tm1.

With the use of the idle loop processing, it is possible to realize higher accuracy compared with a case in which a sleep function is used. However, according to a method using the idle loop processing, the load of the central processing unit (CPU) of the communication control apparatus 100 increases in order to repeatedly perform the loop processing.

As described above, when the transmission interval tm1 is measured using a command to perform timer processing such as the sleep function, there is a case that the high-accuracy measurement of the transmission interval tm1 is not allowed. On the other hand, when the transmission interval tm1 is measured using the idle loop processing, the high-accuracy measurement of the transmission interval tm1 is allowed in response to the command to perform the timer processing but the load of the CPU increases. As described above, it is not easy to control the transmission rate with high accuracy according to software.

### (First Embodiment)

Accordingly, the communication control apparatus 100 in a first embodiment executes a prescribed command at a specified transmission cycle, and acquires a start time at which the execution has been started and an end time at which the execution has been ended. Then, the communication control apparatus 100 performs the execution and the acquisition while changing the transmission cycle, and specifies a transmission cycle at which the error between the difference between the end time and the start time and the specified transmission cycle is within a prescribed range.

As described above, the communication control apparatus 100 performs the execution of a prescribed command and the acquisition of times while changing a transmission cycle so as to make an error at the execution of the prescribed command fall within a prescribed range. Thus, the communication control apparatus 100 is allowed to specify a transmission cycle at which an error is within a prescribed range. That is, the communication control apparatus 100 is allowed to specify a transmission cycle at which the error between the transmission cycle and a measurement time according to a prescribed command is small.

Accordingly, the communication control apparatus 100 is allowed to control a transmission rate with high accuracy by collectively transmitting packets for each transmission cycle at which the error between the transmission cycle and a measurement time is small. Accordingly, the communication control apparatus 100 is allowed to realize the high-accuracy control of a transmission rate even when controlling the transmission rate according to software. Thus, the communication control apparatus 100 is allowed to reduce the occurrence of the loss of packets and improve throughput.

Further, according to the communication control apparatus 100 in the embodiment, the high-accuracy measurement of a transmission cycle is allowed according to a prescribed command such as a sleep function. Accordingly, since the communication control apparatus 100 does not use idle loop processing, an increase in the load of the CPU is allowed.

### (Flow of Processing of First Embodiment)

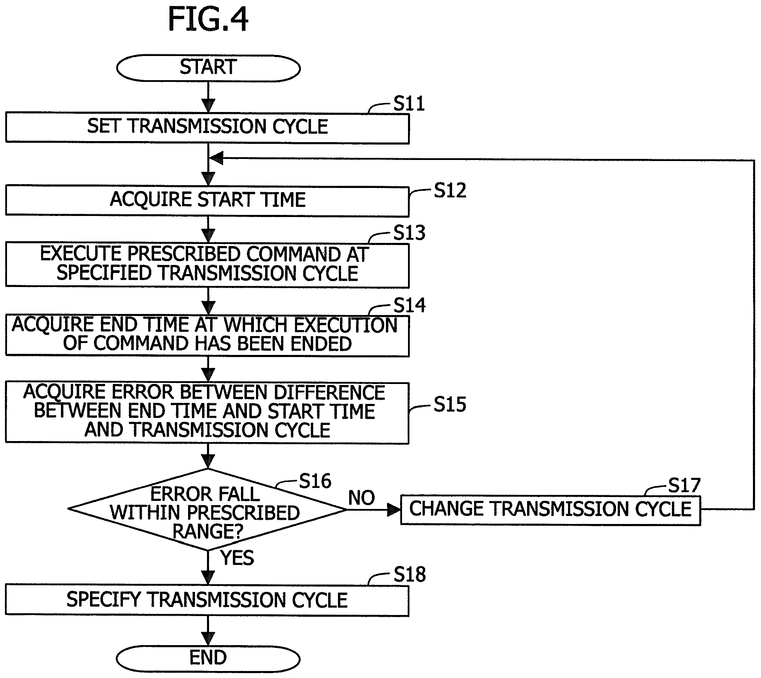

FIG. 4 is a flowchart describing the flow of the processing of the communication control apparatus 100 in the first embodiment.

S11: The communication control apparatus 100 sets any transmission cycle.

S12: The communication control apparatus 100 executes a command to acquire a time such as a time function and acquires a current time. That is, the communication control apparatus 100 acquires a time at which a prescribed command has been started.

S13: The communication control apparatus 100 executes the prescribed command at the specified transmission cycle set in step S11. The prescribed command is a command to perform prescribed processing for a specified time. As described above, the prescribed command is a command to perform timer processing such as a sleep function, for example.

S14: The communication control apparatus 100 acquires an end time at which the execution of the prescribed command has been ended. Like step S12, the communication control apparatus 100 executes a command to acquire a time such as a time function and acquires a current time as an end time.

As illustrated in steps S11 to S14, the communication control apparatus 100 executes the prescribed command at the specified transmission cycle, and acquires the start time at which the execution of the command has been started and the end time at which the execution of the command has been ended. Thus, the communication control apparatus 100 is allowed to acquire a measurement time (te1 to te5 in FIG. 3) in a case in which the prescribed command is executed.

S15: The communication control apparatus 100 calculates the error (errors er2 to er4 in FIG. 3) between the difference (measurement time) between the end time acquired in step S14 and the start time acquired in step S12 and the transmission cycle (S11).

S16: The communication control apparatus 100 determines whether the error calculated in step S15 is within a prescribed range.

S17: When the error does not fall within the prescribed range (No in S16), the communication control apparatus 100 changes the transmission cycle and repeatedly performs the processing of steps S12 to S16.

S18: On the other hand, when the error is within the prescribed range (Yes in S16), the communication control apparatus 100 specifies the transmission cycle as the transmission cycle at which the error is within the prescribed range.

As illustrated in steps S15 to S18, the communication control apparatus 100 performs the execution and the acquisition while changing the transmission cycle to specify the transmission cycle at which the error between the difference between the end time and the start time and the specified transmission cycle is within the prescribed range. Thus, the communication control apparatus 100 is allowed to specify the transmission cycle at which the error becomes small.

Note that although not illustrated in the figures, the communication control apparatus 100 in the first embodiment includes a CPU and a main memory. Further, when the CPU executes a communication control program loaded into the main memory, the communication control processing illustrated in the flowchart of FIG. 4 is realized.

### (Description of Processing of First Embodiment)

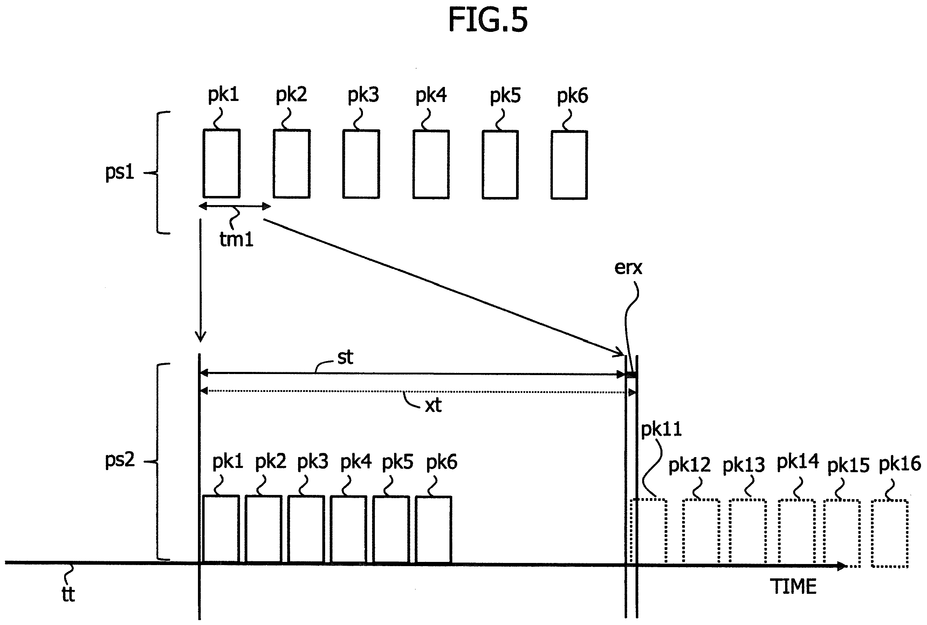

FIG. 5 is a diagram schematically describing the communication control processing of the first embodiment. In FIG. 5, the same constituents as those illustrated in FIGS. 2 and 3 are denoted by the same symbols.

Communication control processing ps1 illustrated in FIG. 5 indicates the communication control processing illustrated in FIGS. 2 and 3. On the other hand, communication control processing ps2 illustrated in FIG. 5 indicates communication control processing in a case in which packets are transmitted at a transmission cycle st specified according to the flowchart of FIG. 4.

A solid arrow st indicates a transmission cycle, and a dashed arrow xt indicates the difference (measurement time) between a start time and an end time in a case in which a command is executed at a specified transmission cycle.

Note that when a command is executed at a specified transmission cycle, a time obtained by subtracting the processing time of packets pk1 to pk6 from the transmission cycle st (time until the transmission of a packet pk11 after the transmission of the packet pk6) is, for example, specified as the parameter of a sleep function (command). Thus, the execution of the command at the specified transmission cycle st is realized. Further, a heavy line erx indicates the error between the transmission cycle st and the measurement time xt.

As illustrated in the communication control processing ps2, the communication control apparatus 100 collectively transmits data of an amount corresponding to a transmission rate for each transmission cycle st. The data of the amount corresponding to the transmission rate is a value obtained by multiplying the transmission rate by the transmission cycle st. In the example of FIG. 5, the data of the amount corresponding to the transmission rate corresponds to the packets pk1 to pk6. Further, as illustrated in FIG. 5, the communication control apparatus 100 transmits packets pk11 to pk16 at the next transmission cycle st.

As described above, instead of transmitting packets with a transmission interval tm1 placed therebetween, the communication control apparatus 100 in the embodiment collectively transmits a plurality of packets corresponding to a transmission rate for each long transmission cycle st at which an error erx is within a prescribed range. The communication control apparatus 100 is allowed to measure a transmission cycle st with high accuracy. Therefore, by transmitting data of an amount corresponding to a transmission rate for each transmission cycle st, the communication control apparatus 100 is allowed to control the transmission rate with high accuracy.

Further, an error erx is different depending on an operation system or the like even when a transmission cycle st is the same. Further, when the communication control apparatus 100 is realized according to a virtual machine, an error erx is different depending on the combinations of an operation system and hardware resources allocated to the virtual machine. Accordingly, by specifying a transmission cycle st at which an error erx is within a prescribed range on an environment to control the transmission rate, the communication control apparatus 100 is allowed to control the transmission rate with higher accuracy.

### (Second Embodiment)

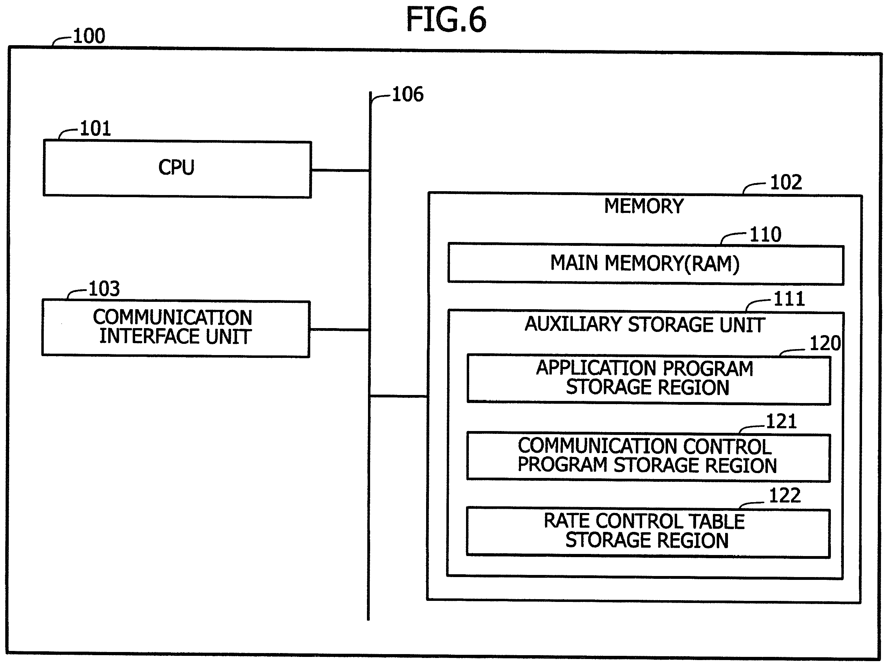

FIG. 6 is a hardware configuration diagram of a communication control apparatus 100 (100a, 100b) in a second embodiment. The communication control apparatus 100 has, for example, a CPU 101, a memory 102 including a main memory 110, an auxiliary storage unit 111, or the like, and a communication interface unit 103. The respective units are connected to each other through a bus 106.

The CPU 101 is connected to the memory 102 or the like through the bus 106, and controls the entire communication control apparatus 100. The communication interface unit 103 is connected to a relay apparatus 300, other apparatuses, or the like through wire communication, and transmits/receives data to/from such apparatuses. The communication interface unit 103 is, for example, a network interface card (NIC).

The main memory 110 such as a random access memory (RAM) stores data or the like to be processed by the CPU 101. The auxiliary storage unit 111 has a region (not illustrated) that stores the program of an operation system to be executed by the CPU 101, an application program storage region 120, and a communication control program storage region 121. Further, the auxiliary storage unit 111 has a rate control table storage region 122. The auxiliary storage unit 111 indicates a hard disk drive (HDD), a non-volatile semiconductor memory, or the like.

The application program of the application program storage region 120 (hereinafter called the application program 120) is loaded into the main memory 110. Then, when the CPU 101 executes the application program 120 loaded into the main memory 110, the processing of an application that manages the transmission/reception of data is realized.

The communication control program of the communication control program storage region 121 (hereinafter called the communication control program 121) is loaded into the main memory 110. Then, when the CPU 101 executes the communication control program 121 loaded into the main memory 110, communication control processing in the embodiment is realized.

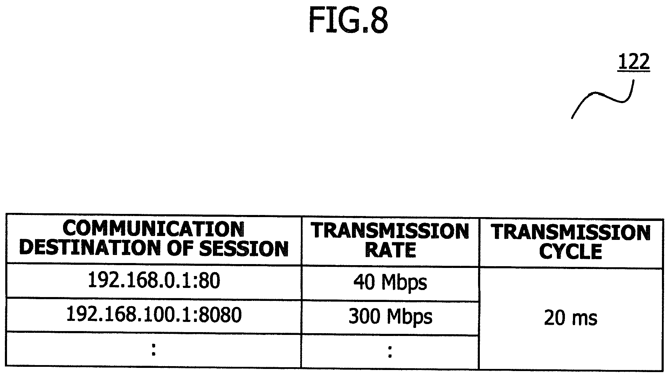

The rate control table of the rate control table storage region 122 (hereinafter called the rate control table 122) has information such as a transmission cycle st and a transmission rate for each of the communication destinations of sessions. An example of the rate control table 122 will be described later with reference to FIG. 8.

### (Function of Software of Communication Control Apparatus 100)

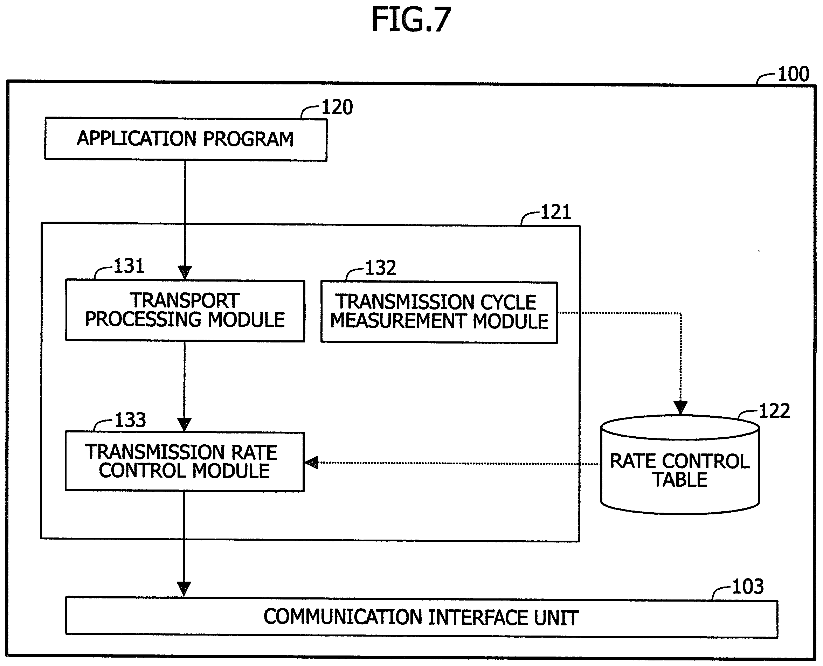

FIG. 7 is a diagram illustrating the function of the software of the communication control apparatus 100 illustrated in FIG. 6. In FIG. 7, the same constituents as those illustrated in FIG. 6 are denoted by the same symbols. As illustrated in FIG. 7, the communication control program 121 has, for example, a transport processing module 131, a transmission cycle measurement module 132, and a transmission rate control module 133.

The transport processing module 131 receives data to be transmitted from the application program 120 and generates packets including the data to be transmitted. Then, the transport processing module 131 outputs the generated packets to the transmission rate control module 133.

The transmission cycle measurement module 132 specifies a transmission cycle st at which an error erx is within a prescribed range. Further, the transmission cycle measurement module 132 stores the specified transmission cycle st in the rate control table 122.

That is, the transmission cycle measurement module 132 executes a prescribed command at the specified transmission cycle st and acquires a start time at which the execution has been started and an end time at which the execution has been ended. Then, the transmission cycle measurement module 132 performs the execution and the acquisition while changing the transmission cycle st to specify a transmission cycle st at which the error erx between the difference between the end time and the start time and the specified transmission cycle st is within a prescribed range.

The transmission rate control module 133 acquires packets including data to be transmitted from the transport processing module 131 and refers to the rate control table 122 to acquire a transmission cycle st and a transmission rate of the transmission destination of the data. The transmission rate control module 133 transmits for each transmission cycle st the data to be transmitted of an amount corresponding to the transmission rate to a client apparatus 200 through the communication interface unit 103.

### (Rate Control Table 122)

FIG. 8 is a diagram illustrating an example of the rate control table 122 illustrated in FIGS. 6 and 7. The rate control table 122 has the items of the communication destination of a session, a transmission rate, and a transmission cycle st. The transmission rate indicates the amount of data to be transmitted per unit time. The transmission cycle st is information to be specified by the transmission cycle measurement module 132 of FIG. 7.

In the example of FIG. 8, the communication destination of the session includes the combinations of Internet Protocol (IP) addresses and port numbers. The transmission rate is set according to a contract with a communication business owner or the like. Further, even if the IP addresses are the same, the transmission rate may be different depending on the port numbers. Accordingly, the rate control table 122 illustrated in FIG. 8 has information on the transmission rate for each of the combinations of the IP addresses and the port numbers. However, the rate control table is not limited to the example, but the communication destination of the session may include only the IP addresses.

The rate control table 122 illustrated in FIG. 8 has "192.168.0.1:80" and "192.168.100.1:8080" as information on the communication destination of the session. Specifically, the transmission rate of the communication destination "192.168.0.1:80" is "40 megabits per second (Mbps)," and the transmission cycle st thereof is "20 milliseconds (ms)." Further, the transmission rate of the communication destination "192.168.100.1:8080" is "300 Mbps," and the transmission cycle st thereof is "20 ms."

The transmission cycle st is set according to, for example, the hardware, software, or the like of the communication control apparatus 100. Accordingly, as illustrated in FIG. 8, the transmission cycle st specified in the same communication control apparatus 100 has the same value.

### (Flow of Processing of Communication Control Program 121)

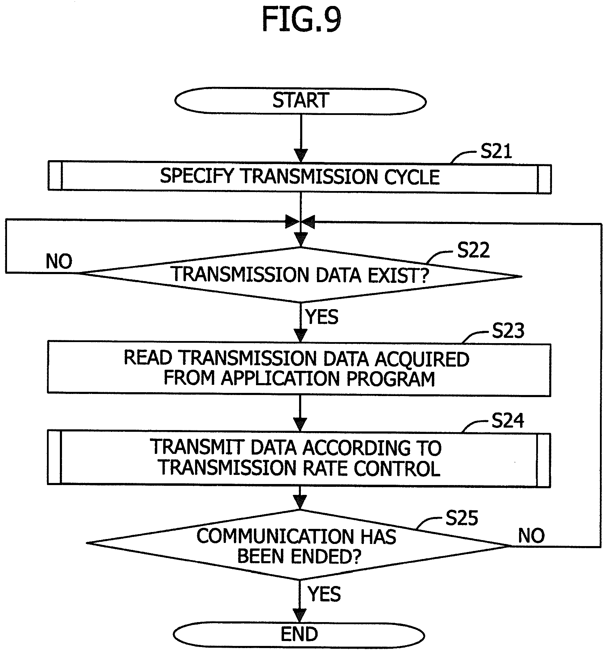

FIG. 9 is a flowchart describing the flow of the processing of the communication control program 121 illustrated in FIGS. 6 and 7.

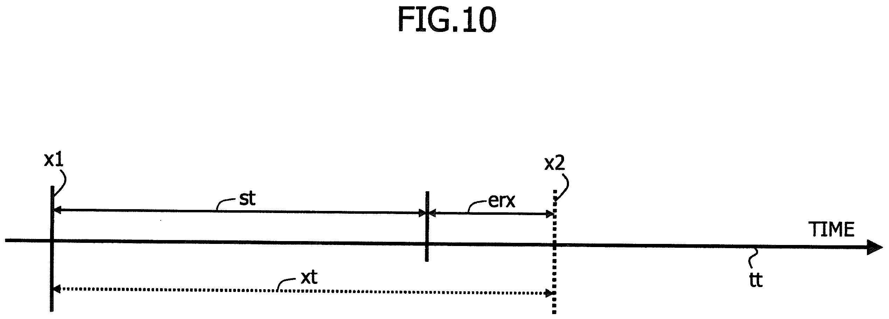

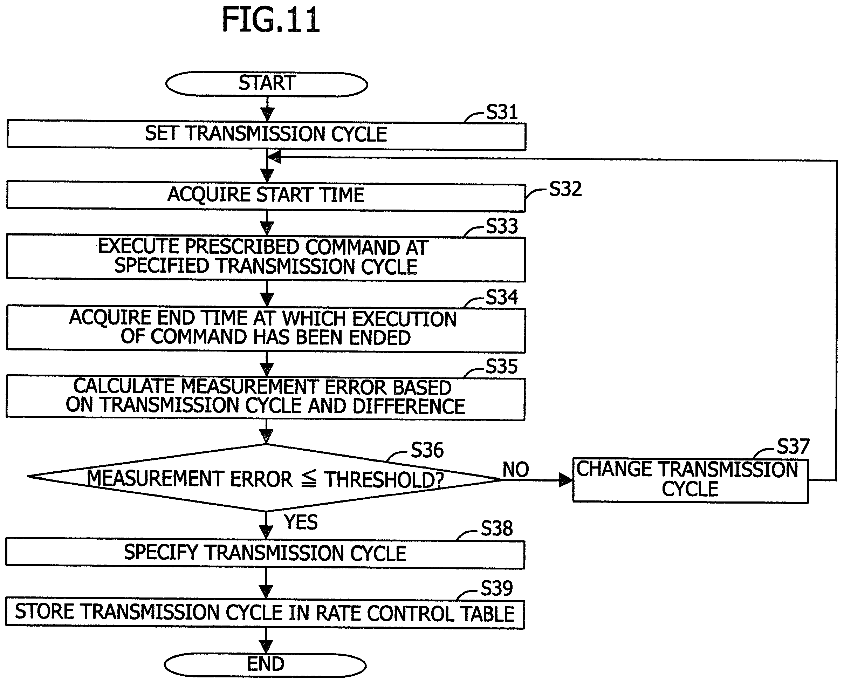

S21: At the activation of a system, the transmission cycle measurement module 132 of the communication control program 121 specifies a transmission cycle st. The details of processing to specify the transmission cycle st will be described later with reference to FIGS. 10 and 11.

The activation of the system is, for example, the activation of the communication control program 121, the start of the processing of the application program 120, or the like. As described above, the communication control program 121 specifies the transmission cycle st in advance before processing to transmit data. Thus, it becomes possible to reduce overhead at the transmission of the data.

S22: The transport processing module 131 of the communication control program 121 determines whether data to be transmitted (hereinafter called transmission data) exists. The transport processing module 131 repeatedly performs the processing of step S22 until the transmission data is detected.

S23: When the transmission data exists (Yes in S22), the transport processing module 131 reads the transmission data acquired from the application program 120. The transport processing module 131 generates, for example, a plurality of packets including the transmission data and outputs the same to the transmission rate control module 133 of the communication control program 121.

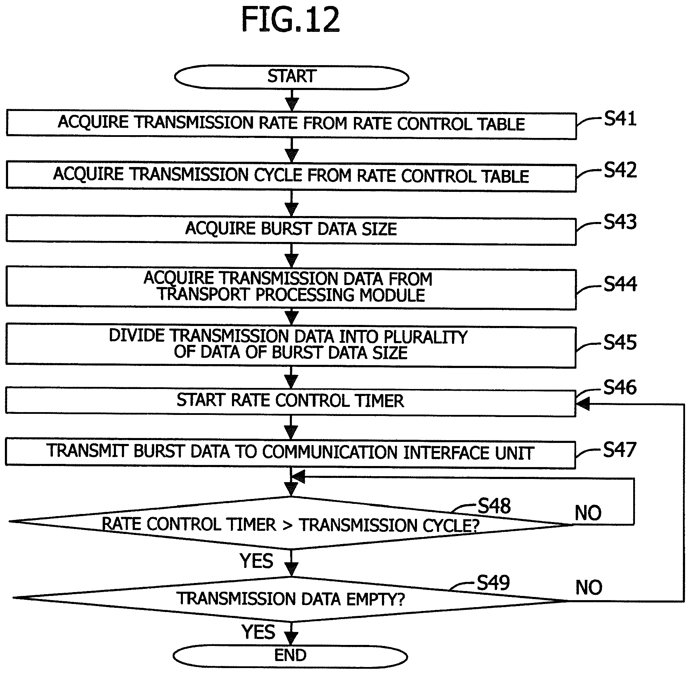

S24: The transmission rate control module 133 transmits data of an amount corresponding to a transmission rate for each transmission cycle st specified in step S21 out of the plurality of packets including the transmission data. The details of the processing of step S24 will be described later with reference to FIG. 12.

S25: The transport processing module 131 determines whether the communication has been ended. When the communication has not been ended (No in S25), the communication control program 121 transits to the processing of step S22 to cause the transport processing module 131 to wait for the detection of the transmission data. On the other hand, when the communication has been ended (Yes in S25), i.e., when the processing to end the communication has been performed, the communication control program 121 ends the processing.

### (Specification of Transmission Cycle st (S21 of FIG. 9))

FIG. 10 is a diagram schematically describing the processing of step S21 of FIG. 9. As described above with reference to FIG. 9, the transmission cycle measurement module 132 specifies a transmission cycle st as the processing of step S21.

An arrow tt illustrated in FIG. 10 indicate the elapse of a time. Further, in FIG. 10, a time t1 indicates a start time at which a command has been executed at the specified transmission cycle st, and a time t2 indicates an end time. Further, a time xt indicates the difference (measurement time) between the start time t1 and the end time t2, and a time erx indicates the error between the difference (measurement time) xt and the transmission cycle st.

In the example of FIG. 10, the measurement time xt is longer than the transmission cycle st. However, without being limited to the example, the measurement time xt may be shorter than the transmission cycle st.

For example, when the error erx is a first threshold or less, the transmission cycle measurement module 132 specifies the specified transmission cycle st as a transmission cycle at which the error erx is within a prescribed range. Thus, the transmission cycle measurement module 132 is allowed to appropriately specify the transmission cycle st at which the error erx is reduced to a value smaller than a prescribed value.

Alternatively, when the ratio of the error erx to the transmission cycle st is a second threshold or less, the transmission cycle measurement module 132 specifies the specified transmission cycle st as the transmission cycle at which the error erx is within the prescribed range. Thus, the transmission cycle measurement module 132 is allowed to appropriately specify the transmission cycle st at which the ratio of the error erx to the transmission cycle st is reduced to a ratio smaller than a prescribed ratio.

The thresholds (first and second thresholds) are determined according to, for example, a transmission rate, an allowable burst-transmitted data size, or the like. Alternatively, the thresholds may be determined according to a verification result obtained when data is transmitted, or the like.

When the error erx does not fall within the prescribed range, the transmission cycle measurement module 132 changes the transmission cycle st to measure the measurement time xt so as to make the error erx fall within the prescribed range. Thus, the transmission cycle measurement module 132 specifies the transmission cycle st at which the error erx is within the prescribed range.

FIG. 11 is a flowchart describing the details of the processing of step S21 of FIG. 9. Steps S31 to S34 of FIG. 11 are the same as steps S11 to S14 of the flowchart of FIG. 4. Accordingly, the description of the processing of steps S31 to S34 will be omitted.

Note that in the example of FIG. 11, the transmission cycle measurement module 132 determines whether the ratio of an error erx to a transmission cycle st is within a threshold (second threshold) to determine whether the error erx is within a prescribed range.

S35: The transmission cycle measurement module 132 calculates a measurement error based on a transmission cycle st and the difference (measurement time) xt between an end time and a start time. The transmission cycle measurement module 132 calculates the ratio of an error erx to the transmission cycle st as the measurement error. For example, when the transmission cycle st is "16 ms" and the measurement time xt is "16.5 ms," the measurement error is "0.03 (≅ 0.5 ms/16 ms)."

S36: The transmission cycle measurement module 132 determines whether the measurement error is a threshold or less. In the embodiment, the threshold (second threshold) is, for example, "0.01."

S37: When the measurement error exceeds the threshold (No in S36), the transmission cycle measurement module 132 changes the transmission cycle st to perform the processing of steps S32 to S36. Here, the measurement error "0.03" exceeds the threshold "0.01." Accordingly, the transmission cycle measurement module 132 changes the transmission cycle st from "16 ms" to "17 ms," for example.

For example, when the measurement time xt is longer than the transmission cycle st, the transmission cycle measurement module 132 changes the transmission cycle st to a value longer than a previous value. On the other hand, when the measurement time xt is shorter than the transmission cycle st, the transmission cycle measurement module 132 changes the transmission cycle st to, for example, a value shorter than the previous value.

As described above, the transmission cycle measurement module 132 changes the transmission cycle st according to a difference to perform the execution and the acquisition. Thus, the transmission cycle measurement module 132 is allowed to efficiently specify the transmission cycle st at which the error erx is within a prescribed range.

The transmission cycle st is not limited to the example, but the transmission cycle measurement module 132 may change the transmission cycle st to a value longer than a previous value when a difference is shorter than the transmission cycle st. Thus, when accuracy in timer control in a short time is low, it becomes possible to efficiently specify the transmission cycle st at which the error erx is within a prescribed range.

S38: On the other hand, when the measurement error is within the threshold (Yes in S36), the transmission cycle measurement module 132 specifies a current transmission cycle st as the transmission cycle st at which the error erx is within the prescribed range. The transmission cycle measurement module 132 specifies, for example, "20 ms" as the transmission cycle st at which the error erx is within the prescribed range.

S39: The transmission cycle measurement module 132 stores the transmission cycle st specified in step S38 in the rate control table 122 (FIG. 8). The transmission cycle measurement module 132 stores "20 ms" as the transmission cycle st for the communication destination of each session in the rate control table 122.

As described above, the transmission cycle measurement module 132 determines whether the error erx is within a prescribed range. The transmission cycle measurement module 132 changes the transmission cycle st to perform the execution and the acquisition when the error erx does not fall within a prescribed range, and determines the transmission cycle st when the error erx is within the prescribed range. Thus, the transmission cycle measurement module 132 is allowed to efficiently specify the transmission cycle st at which the error erx is within a prescribed range.

Note that even when the measurement error is within the threshold (Yes in S36), the transmission cycle measurement module 132 may change the transmission cycle st to a value shorter than the previous value to perform the processing of steps S32 to S36. Thus, the transmission cycle measurement module 132 is allowed to specify a shorter transmission cycle st among the transmission cycles st at which the error erx is within a prescribed range. When the transmission cycle st is short, the amount of data to be burst-transmitted for each transmission cycle st reduces. Thus, the transmission cycle measurement module 132 is allowed to reduce the occurrence of the loss of packets.

Further, the transmission cycle measurement module 132 may set an upper limit on the transmission cycle st. When the transmission cycle st reaches the upper limit, the transmission cycle measurement module 132 may specify a transmission cycle st at which the error erx becomes the smallest within a range in which the transmission cycle st does not exceed the upper limit.

### (Control of Transmission Rate (S24 of FIG. 9))

FIG. 12 is a flowchart describing the details of the processing of step S24 of FIG. 9. As described above with reference to FIG. 9, the transmission rate control module 133 transmits data of an amount corresponding to a transmission rate for each transmission cycle st as the processing of step S24.

S41: The transmission rate control module 133 refers to the rate control table 122 (FIG. 8) to acquire the transmission rate of the transmission destination of transmission data (the communication destination of a session). When the transmission destination is, for example, the communication destination "192.168.100.1:8080," the transmission rate control module 133 acquires "300 Mbps" as the transmission rate.

S42: The transmission rate control module 133 refers to the rate control table 122 (FIG. 8) to acquire the transmission cycle st of the transmission destination of the transmission data. When the transmission destination is, for example, the communication destination "192.168.100.1:8080," the transmission rate control module 133 acquires "20 ms" st as the transmission cycle.

S43: The transmission rate control module 133 calculates the size of data (hereinafter called burst data) to be burst-transmitted within the transmission cycle st. The burst data is the size of data corresponding to a transmission rate to be transmitted for each transmission cycle st.

The transmission rate control module 133 calculates the size of the burst data according to the formula "transmission rate x transmission cycle." When the transmission destination is the communication destination "192.168.100.1:8080," the transmission rate control module 133 acquires the size of the burst data "0.75 megabytes (MB) (= 300 Mbps x 20 ms)."

S44: The transmission rate control module 133 acquires the transmission data from the transport processing module 131. That is, the transmission rate control module 133 acquires a plurality of packets including the transmission data.

S45: The transmission rate control module 133 divides the transmission data into a plurality of burst data according to the size of the burst data "0.75 MB" calculated in step S43. That is, the transmission rate control module 133 divides the plurality of packets into a plurality of packet groups (a packet group includes six packets in the example of FIG. 5) each of which has the total size of "0.75 MB."

S46: The transmission rate control module 133 starts a rate control timer in which the transmission cycle st has been specified.

S47: The transmission rate control module 133 transmits one of the plurality of burst data having been divided in step S45 to the communication interface unit 103. Thus, the transmission rate control module 133 burst-transmits a packet group corresponding to the burst data to the relay apparatus 300 through the communication interface unit 103.

S48: The transmission rate control module 133 determines whether the elapsed time of the rate control timer starting in step S46 has reached the transmission cycle st. That is, the transmission rate control module 133 determines whether the execution state of a sleep function has been ended. When the elapsed time has not reached the transmission cycle st (No in S48), the transmission rate control module 133 repeatedly performs the determination of step S48 until the elapsed time reaches the transmission cycle st.

As described above, the transmission cycle st in the embodiment is a time at which the error erx between a measurement time xt by the sleep function and the transmission cycle st is within a prescribed range. Accordingly, the transmission rate control module 133 is allowed to measure the transmission cycle st with high accuracy.

S49: When the elapsed time has reached the transmission cycle st (Yes in S48), the transmission rate control module 133 determines whether the transmission data has become empty. That is, the transmission rate control module 133 determines whether all the burst data have been transmitted. When all the burst data have not been transmitted (No in S49), the transmission rate control module 133 performs the processing of steps S46 to S48. On the other hand, when the transmission data has become empty (Yes in S49), the transmission rate control module 133 ends the processing.

As described above, the communication control program 121 in the embodiment acquires a transmission cycle at which an error erx between the difference between an execution start time and an execution end time and a specified transmission cycle st is within a prescribed range when a prescribed command is executed at the specified transmission cycle st. Further, the communication control program 121 transmits data of an amount corresponding to a transmission rate for each transmission cycle st.

The communication control program 121 is allowed to measure a transmission cycle st with high accuracy. Therefore, by transmitting data of an amount corresponding to a transmission rate for each transmission cycle st, the communication control program 121 is allowed to realize a desired transmission rate with high accuracy. Thus, the communication control program 121 is allowed to reduce the occurrence of the overflow of the buffer of the relay apparatus 300 and reduce the occurrence of the loss of packets. Accordingly, throughput is improved.

Further, the communication control program 121 repeatedly performs the transmission of data according to a specified transmission cycle st. That is, by transmitting data according to a specified transmission cycle st, the communication control program 121 is allowed to reduce overhead at the transmission after the specification of the transmission cycle st.

### (Third Embodiment)

The communication control apparatuses 100 of the first and second embodiments exemplify a case in which data of an amount corresponding to a transmission rate is transmitted for each transmission cycle st at which an error erx is within a prescribed range. A communication control apparatus 100 of a third embodiment divides transmission data into a plurality of data within a transmission cycle st and transmits the divided transmission data with a transmission interval placed therebetween when transmitting the transmission data. Thus, the communication control apparatus 100 is allowed to further reduce the occurrence of the loss of packets.

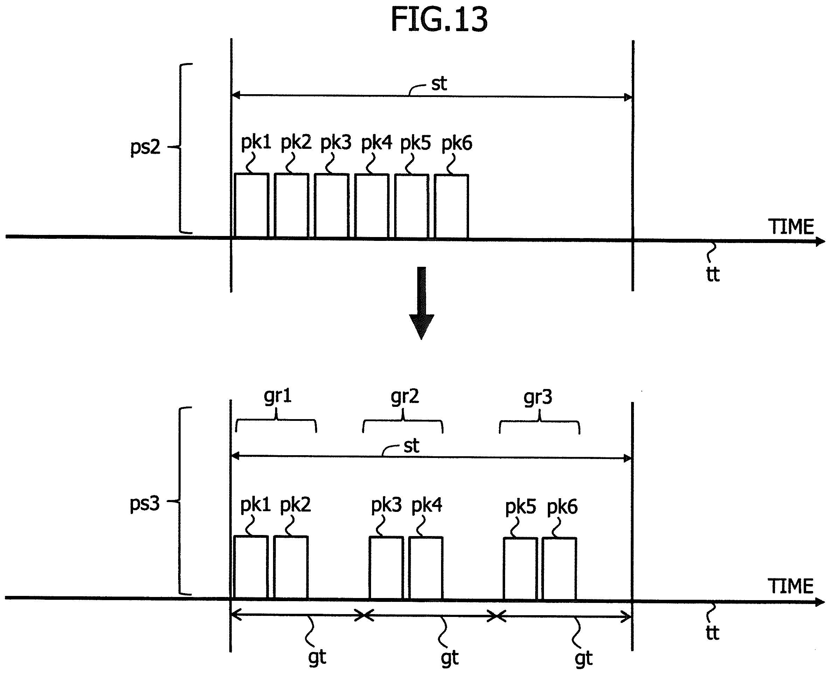

FIG. 13 is a diagram schematically describing the communication control processing of the third embodiment. In FIG. 13, the same constituents as those illustrated in FIG. 5 are denoted by the same symbols. Communication control processing ps2 illustrated in FIG. 13 indicates the communication control processing in the first embodiment illustrated in FIG. 5. On the other hand, communication control processing ps3 illustrated in FIG. 13 indicates the communication control processing in the third embodiment.

The communication control apparatus 100 in the third embodiment divides burst data to be transmitted within a transmission cycle st into a plurality of groups gr1 to gr3 (hereinafter also called groups gr). Then, the communication control apparatus 100 transmits the packet groups (divided data) of the respective groups gr with a transmission interval gt placed therebetween.

According to the example of FIG. 13, the communication control apparatus 100 divides six packets pk1 to pk6 corresponding to burst data into three groups gr1 to gr3. In the example of FIG. 13, the respective groups gr include two packets pk. Then, the communication control apparatus 100 transmits the packet groups of groups gr for each transmission interval gt.

As illustrated in FIG. 13, the communication control apparatus 100 in the third embodiment divides data of an amount corresponding to a transmission rate into a plurality of data according to a first size (hereinafter called an allowable burst size) and transmits the divided data with a transmission interval placed therebetween. The allowable burst size is, for example, the size of data at which the loss of packets does not occur in a client apparatus 200 when the data is burst-transmitted.

Thus, the communication control apparatus 100 is allowed to reduce the size of unit data to be burst-transmitted within the transmission cycle st. That is, the communication control apparatus 100 is allowed to smoothen a transmission rate per short unit time within a transmission cycle st. Thus, a reduction in the occurrence of the overflow of the buffer of a relay apparatus 300 is made possible, and the occurrence of the loss of packets reduces.

### (Hardware Configuration)

The hardware configuration of the communication control apparatus 100 in the third embodiment is the same as that in the second embodiment (FIG. 6). Next, the hardware configuration of the client apparatus 200 (200a, 200b) in the third embodiment will be described. Note that although not illustrated in the figures, the relay apparatus 300 has a CPU, a communication interface unit that performs wire communication, a wireless communication unit that performs wireless communication, a memory having a buffer region, or the like as its hardware configurations.

### (Hardware Configuration of Client Apparatus 200)

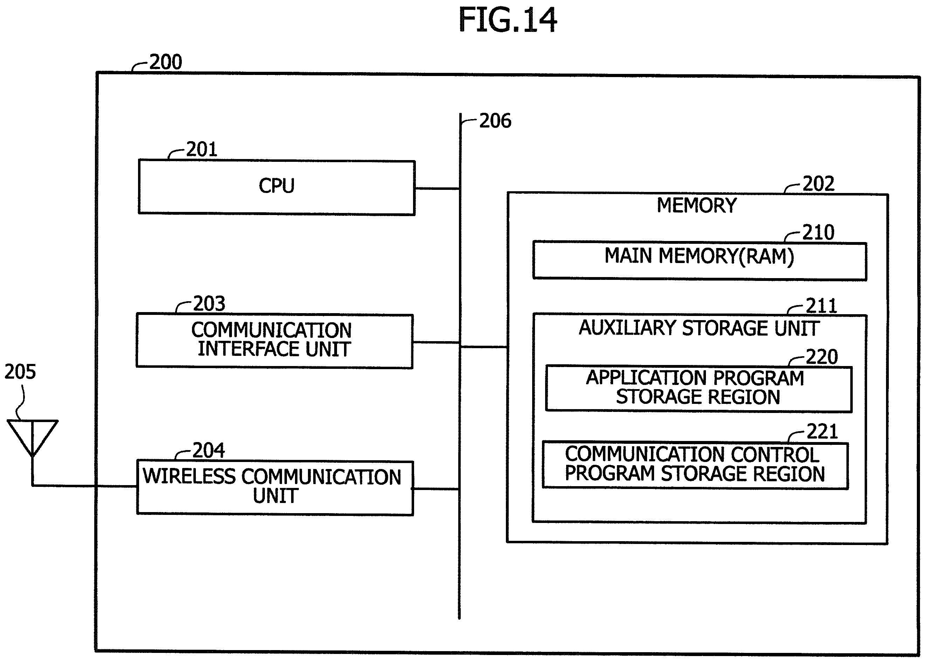

FIG. 14 is a hardware configuration diagram of the client apparatus 200 in the third embodiment. The client apparatus 200 has, for example, a CPU 201, a memory 202 including a main memory 210, an auxiliary storage unit 211, or the like, a communication interface unit 203, and a wireless communication unit 204. The respective units are connected to each other through a bus 206.

The CPU 201 is connected to the memory 202 or the like through the bus 206, and controls the entire client apparatus 200. The communication interface unit 203 is connected to other apparatuses through wire communication, and transmits/receives data to/from such apparatuses. The communication interface unit 203 is, for example, a NIC. The wireless communication unit 204 transmits/receives data to/from the relay apparatus 300 through an antenna 205.

The main memory 210 such as a RAM stores data or the like to be processed by the CPU 201. The auxiliary storage unit 211 has a region (not illustrated) that stores the program of an operation system to be executed by the CPU 201, an application program storage region 220, and a communication control program storage region 221. The auxiliary storage unit 211 indicates a HDD, a non-volatile semiconductor memory, or the like.

The application program of the application program storage region 220 (hereinafter called the application program 220) is loaded into the main memory 210. Then, when the CPU 201 executes the application program 220 loaded into the main memory 210, the processing of an application that instructs the transmission/reception of data is realized.

The communication control program of the communication control program storage region 221 (hereinafter called the communication control program 221) is loaded into the main memory 210. Then, when the CPU 201 executes the communication control program 221 loaded into the main memory 210, the communication control processing of the client apparatus 200 is realized.

### (Functions of Software)

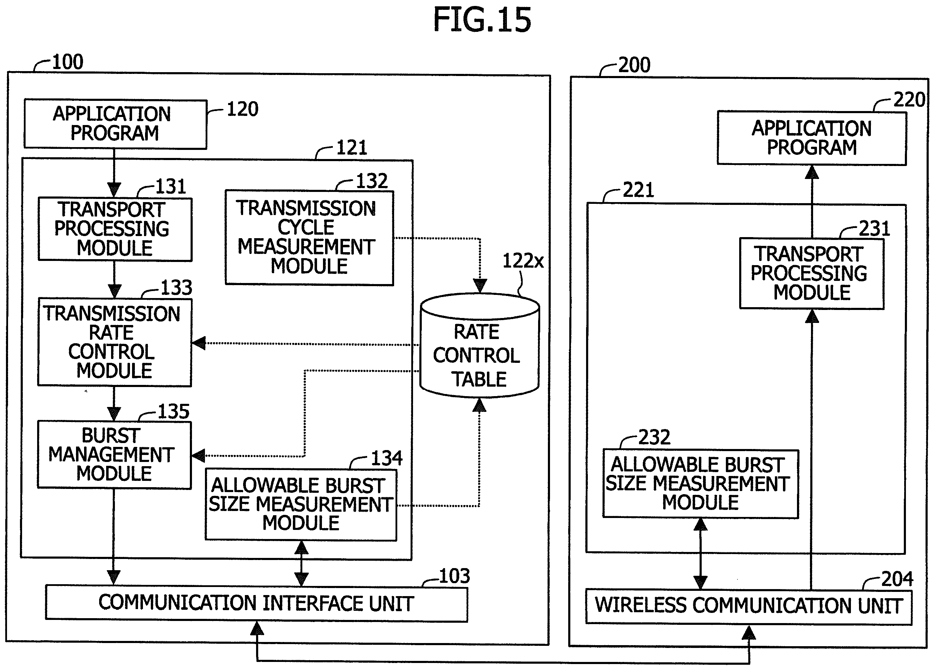

FIG. 15 is a diagram illustrating the functions of the software of the communication control apparatus 100 and the client apparatus 200 in the third embodiment. In FIG. 15, the same constituents as those illustrated in FIGS. 7 and 14 are denoted by the same symbols.

A communication control program 121 of the communication control apparatus 100 illustrated in FIG. 15 has also an allowable burst size measurement module 134 and a burst management module 135, besides the constituents of the second embodiment (FIG. 7).

The allowable burst size measurement module 134 transmits a plurality of packets to the client apparatus 200 according to a prescribed transmission rate. Then, the allowable burst size measurement module 134 acquires an allowable burst size from the client apparatus 200 and stores the same in a rate control table 122x.

The burst management module 135 acquires data (burst data) of an amount corresponding to a transmission rate, which is to be transmitted within a transmission cycle st, from a transmission rate control module 133. Then, the burst management module 135 divides the burst data into a plurality of data according to an allowable burst size and transmits the divided data with a transmission interval placed therebetween.

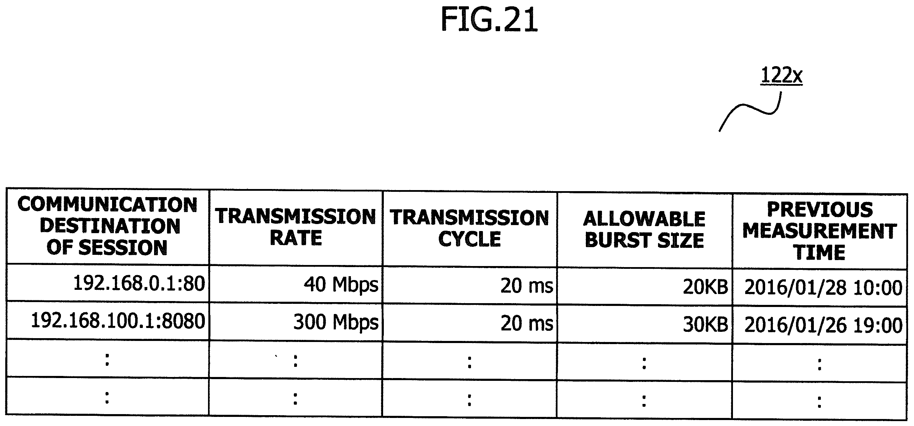

The rate control table 122x in the third embodiment has information on an allowable burst size, besides the information included in the rate control table 122 of the second embodiment. An example of the rate control table 122x will be described later with reference to FIG. 21.

A communication control program 221 of the client apparatus 200 illustrated in FIG. 15 has a transport processing module 231 and an allowable burst size measurement module 232.

The transport processing module 231 outputs data included in packets received through the wireless communication unit 204 to the application program 220. Alternatively, the transport processing module 231 generates packets including data to be transmitted that is received from the application program 220, and transmits the same to the communication control apparatus 100 through the wireless communication unit 204.

The allowable burst size measurement module 232 receives measurement packets from the communication control apparatus 100 through the wireless communication unit 204. Then, the allowable burst size measurement module 232 determines an allowable burst size based on a reception result of the measurement packets, and notifies the communication control apparatus 100 of the same through the wireless communication unit 204.

### (Flow of Processing of Communication Control Program 121)

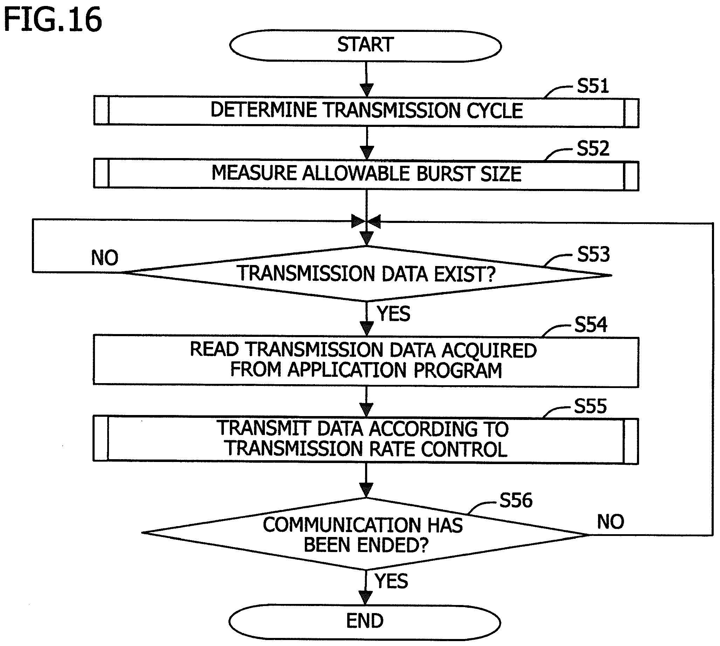

FIG. 16 is a flowchart describing the flow of the processing of the communication control program 121 of the communication control apparatus 100 illustrated in FIG. 15. The processing of step S51 is the same as that of step S21 (FIG. 9) of the second embodiment.

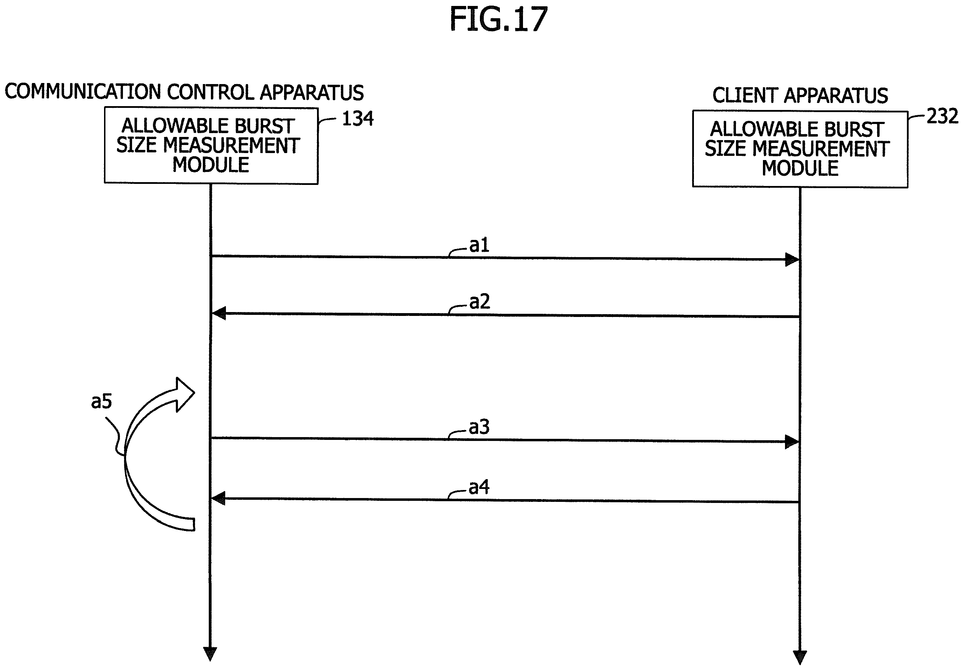

S52: The allowable burst size measurement module 134 performs processing to measure an allowable burst size at the start of a communication session. Further, the allowable burst size measurement module 134 stores the allowable burst size in the rate control table 122x. The details of the processing of step S52 will be described later with reference to FIGS. 17 to 20.

As described above, the allowable burst size measurement module 134 measures an allowable burst size at the start of a session with the client apparatus 200. Thus, the allowable burst size measurement module 134 is allowed to determine an allowable burst size based on the loaded state of the relay apparatus 300 at the transmission of data.

S53: The transport processing module 131 determines whether transmission data exists. The processing of step S53 is the same as that of step S22 (FIG. 9) in the second embodiment.

S54: When the transmission data exists (Yes in S53), the transport processing module 131 reads the transmission data acquired from the application program 120. The processing of step S54 is the same as that of step S23 (FIG. 9) in the second embodiment.

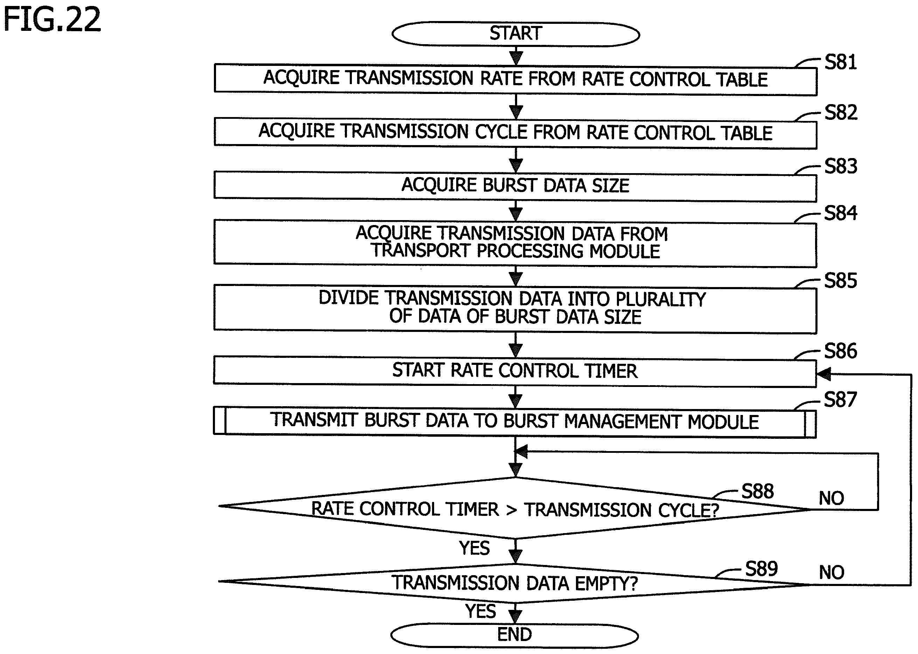

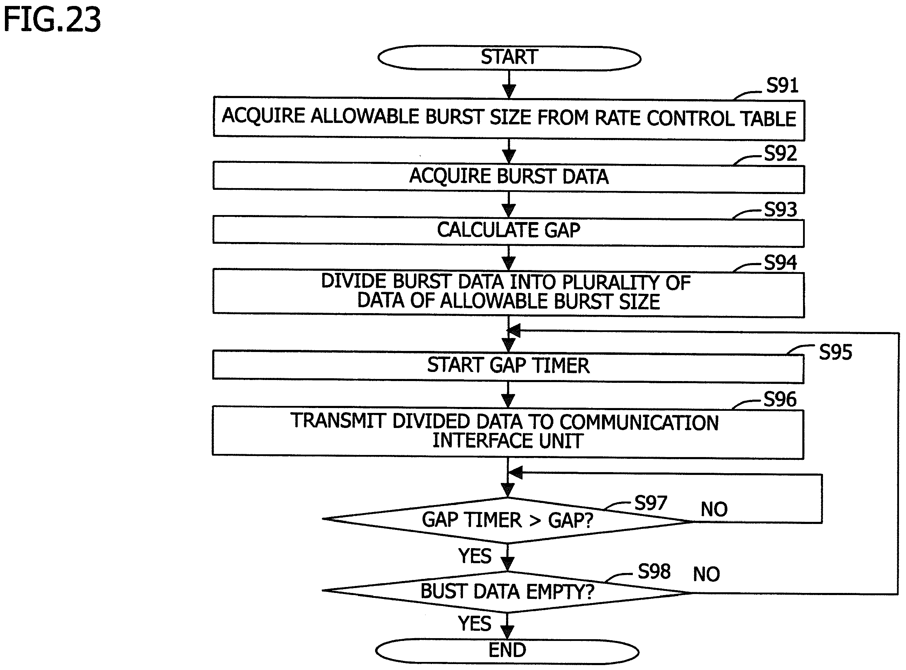

S55: The transmission rate control module 133 calls the burst management module 135 at the transmission of data of an amount corresponding to a transmission rate for each transmission cycle st. The burst management module 135 divides the data, which is to be transmitted within the transmission cycle st, into a plurality of data according to the allowable burst size, and transmits the divided data with a transmission interval placed therebetween. The details of the processing of step S55 will be described later with reference to FIGS. 22 and 23.

S56: The transport processing module 131 determines whether the communication has been ended. When the communication has not been ended (No in S56), the communication control program 121 transits to step S53 to wait for the detection of the transmission data. On the other hand, when the communication has been ended (Yes in S56), i.e., when the processing to end the communication has been performed, the communication control program 121 ends the processing.

### (Flow of Processing to Measure Allowable Burst Size)

FIG. 17 is a sequence diagram of the processing (step S52 of FIG. 16) to measure an allowable burst size. FIG. 17 illustrates the processing of the allowable burst size measurement module 134 of the communication control apparatus 100 and the processing of the allowable burst size measurement module 232 of the client apparatus 200.

Hereinafter, the allowable burst size measurement module 134 of the communication control apparatus 100 will be called a transmission-side measurement module 134. Further, the allowable burst size measurement module 232 of the client apparatus 200 will be called a reception-side measurement module 232.

The transmission-side measurement module 134 notifies the client apparatus 200 of a transmission rate at the transmission of measurement packets (a1). The reception-side measurement module 232 transmits a response indicating the reception of the transmission rate to the transmission-side measurement module 134 (a2).

The transmission-side measurement module 134 burst-transmits the plurality of measurement packets to the client apparatus 200 according to the notified transmission rate (a3). The reception-side measurement module 232 receives the measurement packets, and determines an allowable burst size based on a reception result of the plurality of measurement packets.

The reception-side measurement module 232 notifies the communication control apparatus 100 of the determined burst size (a4). The transmission-side measurement module 134 repeatedly performs steps a3 and a4 based on the allowable burst size and a transmission burst size (the total size of the plurality of measurement packets) (a5).

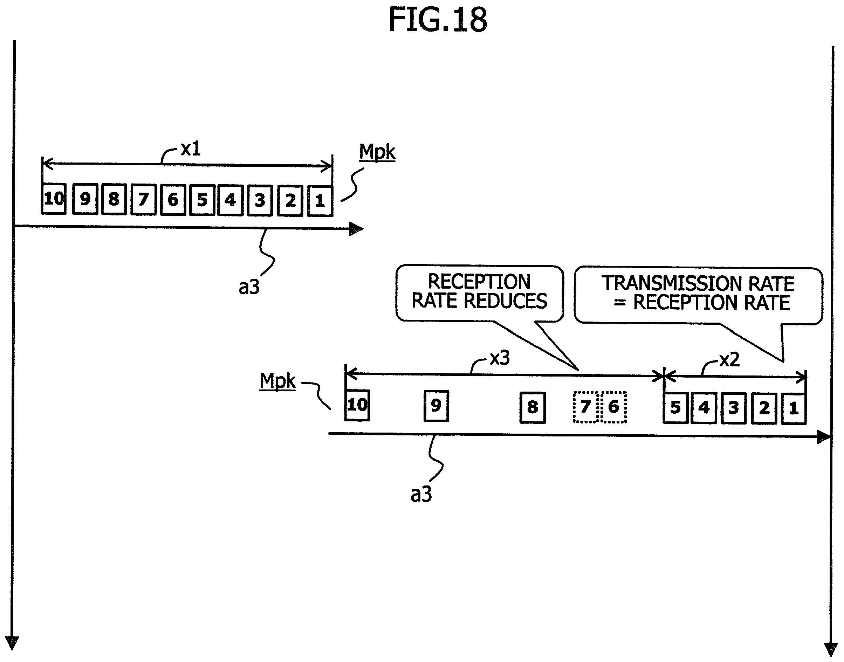

FIG. 18 is a diagram describing an example of the transmission and reception of measurement packets. In the example of FIG. 18, the transmission-side measurement module 134 burst-transmits ten measurement packets Mpk to the client apparatus 200 through the relay apparatus 300 (a3). At this time, a transmission rate x1 is a value obtained by dividing "the total size of the ten packets by the transmission time of the ten packets."

In the example of FIG. 18, the reception-side measurement module 232 successively receives the first to fifth packets (a3). On the other hand, the sixth and seventh packets indicated by dotted rectangles are lost. Further, the reception-side measurement module 232 receives the eighth to tenth packets, but an interval at which the eighth to tenth packets are received is longer than an interval at which the first to fifth packets are received.

In the example of FIG. 18, the reception rate of the first to fifth packets, i.e., the rate x2 obtained by dividing "the total size of the first to fifth packets by the reception time of the first to fifth packets" is the same as the transmission rate x1. On the other hand, the reception rate of the sixth to tenth packets, i.e., the reception rate x3 obtained by dividing "the total size of the eighth to tenth packets by the reception time of the sixth to tenth packets" is smaller than the transmission rate x1.

Accordingly, the reception-side measurement module 232 determines, for example, the total size of packets (the first to fifth packets in the example of FIG. 18) having a reception rate matching a transmission rate as an allowable burst size. Alternatively, the reception-side measurement module 232 may determine the total size of packets (the first to fifth packets in the example of FIG. 18), which have been received before the occurrence of the loss of the packets, as an allowable burst size.

The allowable burst size fluctuates according to the buffer size of the relay apparatus 300 and the use state of the buffer. The use state of the buffer also depends on the loads of other networks to which the relay apparatus 300 is connected. Further, the relay apparatus 300 for a relay may be replaced.

Further, since the relay apparatus 300 is managed under a provider, there is a case that a person in charge of an operation is not allowed to detect the buffer size of the relay apparatus 300. Moreover, since the relay apparatus 300 is also used in the networks of other businesses, a person in charge of an operation is not allowed to easily detect the use state of the buffer of the relay apparatus 300.

Accordingly, as illustrated in FIG. 18, the transmission-side measurement module 134 determines a first size (allowable burst size) based on the reception state of packets in the client apparatus 200 that is the transmission destination of data. Based on the reception state of the packets having reached the client apparatus 200 through the relay apparatus 300, the transmission-side measurement module 134 is allowed to determine the allowable burst size according to the size of the buffer of the relay apparatus 300 or the use state of the buffer.

As described above, even when the size of the buffer of the relay apparatus 300 or the use state of the buffer is undetectable, the transmission-side measurement module 134 is allowed to determine an allowable burst size in consideration of the size or specifications of the buffer. Thus, it becomes possible to appropriately reduce the occurrence of the overflow of the buffer.

Specifically, the transmission-side measurement module 134 determines an allowable burst size based on, for example, the sizes of packet groups at which the loss of packets in the client apparatus 200 does not occur. Thus, the transmission-side measurement module 134 is allowed to reduce the size of data, which is to be burst-transmitted within a transmission cycle st, to a size at which the loss of packets hardly occurs in the client apparatus 200.

Further, the transmission-side measurement module 134 determines an allowable burst size based on, for example, the size of a packet group having a transmission rate in the client apparatus 200 matching a reception rate in the client apparatus 200. Thus, the transmission-side measurement module 134 is allowed to reduce the size of data, which is to be burst-transmitted within a transmission cycle st, to a size at which a reduction in a reception rate hardly occurs in the client apparatus 200.

### (Measurement of Allowable Burst Size (Step S52 of FIG. 16))

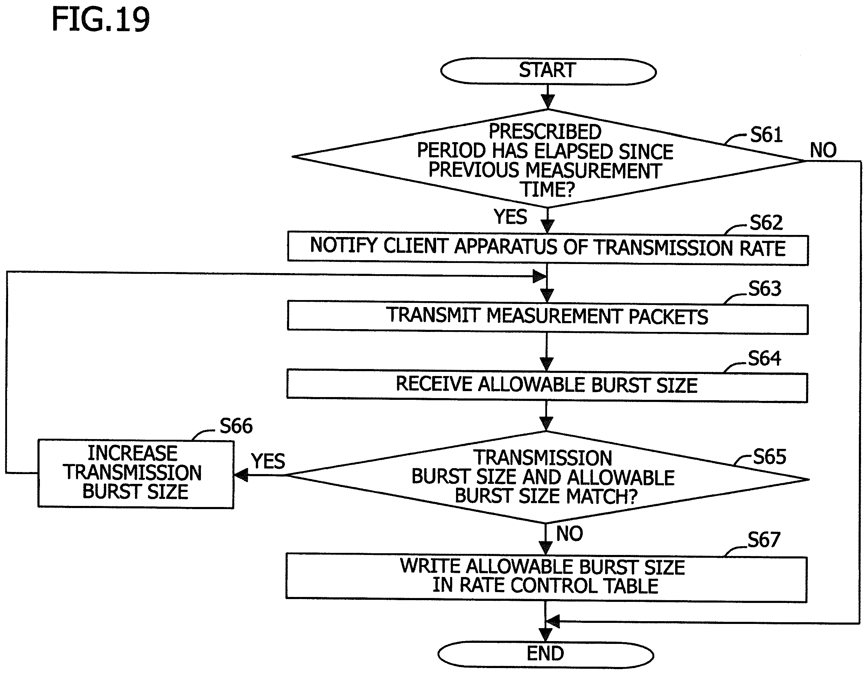

FIG. 19 is a flowchart describing the details of the processing of the transmission-side measurement module (allowable burst size measurement module) 134 of step S52 of FIG. 16.

S61: The transmission-side measurement module 134 determines whether a prescribed period corresponding to the communication destination of a session has elapsed since a previous measurement time. The previous measurement time includes a date and a time at which an allowable burst size was measured last time.

As described above, the allowable burst size fluctuates according to the size of the buffer of the relay apparatus 300 through which the allowable burst size passes and the use state of the buffer. Accordingly, the communication control apparatus 100 periodically measures the allowable burst size. However, the measurement of the allowable burst size causes the occurrence of the overhead of communication processing.

Accordingly, the communication control apparatus 100 measures the allowable burst size, for example, when the prescribed time has elapsed since the previous measurement time. Thus, the communication control apparatus 100 is allowed to reduce an increase in the overhead of the communication processing caused by the measurement of the allowable burst size. On the other hand, when the prescribed period has not elapsed, the communication control apparatus 100 uses the allowable burst size measured last time.

The prescribed period is different for each communication destination of a session according to, for example, a network through which the session passes. For example, when the network through which the session passes is a common line, the load of the network is more likely to change compared with the case of a private line. Accordingly, the prescribed period of the communication destination of the session that passes through the common line is shorter than that of a session that passes through the private line. For example, the prescribed period of the communication destination of the session that passes through the private line indicates one day, and the prescribed period of the communication destination of the session that passes through the common line indicates several hours (for example, three hours).

As described above, the communication control apparatus 100 remeasures the allowable burst size for each prescribed period. Therefore, the communication control apparatus 100 retains the information of the rate control table 122x without removing the same even when the session with the client apparatus 200 as a communication destination is disconnected. Thus, when the prescribed time has not elapsed since the previous measurement time (Yes in S61), the transmission-side measurement module 134 ends the processing.

S62: On the other hand, when the prescribed period has elapsed (No in S61), the transmission-side measurement module 134 notifies the client apparatus 200 of a transmission rate at which a plurality of measurement packets is transmitted.

S63: The transmission-side measurement module 134 transmits the plurality of measurement packets to the client apparatus 200 according to the transmission rate notified in step S62.

S64: The transmission-side measurement module 134 receives the allowable burst size from the client apparatus 200.

S65: The transmission-side measurement module 134 determines whether a transmission burst size (the total size of the plurality of measurement packets) and the received allowable burst size match each other.

S66: When the transmission burst size and the received allowable burst size match each other (Yes in S65), the transmission-side measurement module 134 indicates that the loss of the packets does not occur even when data on the transmission burst size is burst-transmitted. That is, when the transmission burst size and the received allowable burst size match each other, the transmission-side measurement module 134 is allowed to increase the allowable burst size to a greater value. Accordingly, the transmission-side measurement module 134 increases the transmission burst size and executes the processing of steps S63 to S65. For example, the transmission-side measurement module 134 doubles the transmission burst size.

S67: When the transmission burst size and the received allowable burst size do not match each other (No in S65), the transmission-side measurement module 134 indicates that the allowable burst size is smaller than the transmission burst size. Accordingly, the transmission-side measurement module 134 stores the received allowable burst size in the rate control table 122x.

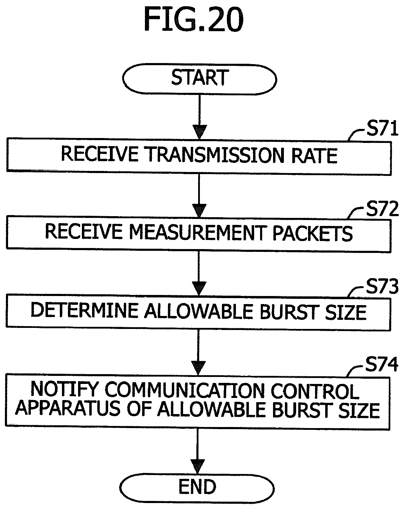

FIG. 20 is a flowchart describing the details of the processing of the reception-side measurement module (allowable burst size measurement module) 232 of step S52 of FIG. 16.

S71: The reception-side measurement module 232 receives a transmission rate from the communication control apparatus 100. At this time, the reception-side measurement module 232 transmits a response indicating the reception of the transmission rate to the transmission-side measurement module 134.

S72: The reception-side measurement module 232 receives a plurality of measurement packets from the communication control apparatus 100. At this time, the reception-side measurement module 232 receives the reception rate of the plurality of measurement packets and the occurrence state of the loss of the packets based on a reception result.

S73: The reception-side measurement module 232 determines a size, at which the reception rate of the measurement packets and the transmission rate received in step S71 match each other, as an allowable burst size. Alternatively, the reception-side measurement module 232 may determine the size of measurement packets, at which the loss of the packets does not occur, among the plurality of measurement packets as the allowable burst size.

S74: The reception-side measurement module 232 notifies the communication control apparatus 100 of the allowable burst size determined in step S73.

Note that in the embodiment, the reception-side measurement module 232 determines the allowable burst size. However, the transmission-side measurement module 134 may determine the allowable burst size. In this case, the transmission-side measurement module 134 acquires the reception rate and the occurrence state of the loss of the packets from the reception-side measurement module 232 to determine the allowable burst size.

### (Rate Control Table 122x)

FIG. 21 is a diagram describing an example of the rate control table 122x described in FIG. 15. The rate control table 122x illustrated in FIG. 21 has the information of an allowable burst size and a previous measurement time, besides the information of the rate control table 122 (FIG. 8) of the second embodiment.

In the example of the rate control table 122x illustrated in FIG. 21, the allowable burst size of the communication destination "192.168.0.1:80" of a session is "20 kilobytes (KB)," and the previous measurement time thereof is "2016/01/28 10:00." Further, the allowable burst size of the communication destination "192.168.100.1:8080" of the session is "30 KB," and the previous measurement time thereof is "2016/01/26 19:00."

The allowable burst size is different depending on the relay apparatus 300 through which the allowable burst size passes. Accordingly, the rate control table 122x illustrated in FIG. 21 has a different allowable burst size for each communication destination of a session.

### (Control of Transmission Rate (Step S55 of FIG. 16))

FIG. 22 is a flowchart describing the details of the processing of step S55 of FIG. 16. The processing of steps S81 to S86 of FIG. 22 is the same as that of steps S41 to S46 described with reference to FIG. 12.

S87: When a rate control timer is started, the transmission rate control module 133 transmits one of a plurality of burst data to the burst management module 135. The burst management module 135 divides the burst data into a plurality of data according to an allowable burst size, and transmits the divided data with a transmission interval placed therebetween. The details of the processing of step S87 will be described later with reference to the flowchart of FIG. 23.

S88: The transmission rate control module 133 determines whether the elapsed time of the rate control timer starting in step S86 has reached a transmission cycle st. When the elapsed time of the rate control timer has not reached the transmission cycle st (No in S88), the transmission rate control module 133 repeatedly performs the determination of step S88 until the elapsed time of the rate control timer reaches the transmission cycle st.

S89: On the other hand, when the elapsed time of the rate control timer has reached the transmission cycle st (Yes in S88), the transmission rate control module 133 determines whether transmission data has become empty. That is, the transmission rate control module 133 determines whether all the burst data have been transmitted. When all the burst data have not been transmitted (No in S89), the transmission rate control module 133 performs the processing of steps S86 to S88. On the other hand, when the transmission data has become empty (Yes in S89), the transmission rate control module 133 ends the processing.

### (Transmission of Divided Data (S87 of FIG. 22))

FIG. 23 is a flowchart describing the details of the processing of step S87 of FIG. 22. As the processing of step S87, the burst management module 135 divides burst data into a plurality of data according to an allowable burst size and transmits the divided data with a transmission interval placed therebetween.

S91: The burst management module 135 refers to the rate control table 122x (FIG. 21) to acquire the allowable burst size of the transmission destination of transmission data (communication destination of a session). When the transmission destination of the data is "192.168.100.1:8080," the burst management module 135 acquires "30 KB" as the allowable burst size.

S92: The burst management module 135 acquires burst data from the transmission rate control module 133.

S93: The burst management module 135 calculates a gap (hereinafter called a transmission interval) (the transmission interval gt of FIG. 13). Specifically, the burst management module 135 calculates the transmission interval gt according to the formula "transmission cycle/the number of divided data." Further, the number of the divided data is calculated according to the formula "burst data size/allowable burst size."

As described above, the burst management module 135 determines the transmission interval gt based on the number of the divided data and the transmission cycle st. Thus, the burst management module 135 is allowed to burst-transmit the divided data for each uniform transmission interval gt within the transmission cycle st.

S94: The burst management module 135 divides the burst data into a plurality of data according to the allowable burst size "30 KB." That is, the burst management module 135 divides the burst data into the plurality of data (three divided data in the example of FIG. 13) each of which has the total size of "30 KB."

S95: The burst management module 135 starts a gap timer in which the transmission interval gt is specified. Specifically, the burst management module 135 executes a sleep function in which the transmission interval gt is specified.

Since the transmission interval gt shorter than the transmission cycle st is specified in the sleep function in step S95, an error may occur in the measurement time of the transmission interval gt. However, since the transmission cycle st is measurable with high accuracy in the embodiment, it is possible to transmit data of an amount corresponding to a transmission rate for each transmission cycle st. Accordingly, even when an error occurs in the transmission interval gt, it is possible to control the transmission rate with high accuracy.

S96: The burst management module 135 transmits one of the plurality of data divided in step S94 to the communication interface unit 103. Thus, the burst management module 135 burst-transmits packets included in the divided data to the relay apparatus 300 through the communication interface unit 103.

S97: The burst management module 135 determines whether the elapsed time of the gap timer starting in step S95 has reached the transmission interval gt. That is, the burst management module 135 determines whether the stopped state of the sleep function has been ended. When the elapsed time of the gap timer has not reached the transmission interval gt (No in S97), the burst management module 135 repeatedly performs the determination of step S97 until the elapsed time reaches the transmission interval gt.

S98: When the elapsed time of the gap timer has reached the transmission interval gt (Yes in S97), the burst management module 135 determines whether the burst data has become empty. That is, the burst management module 135 determines whether the one burst data has been transmitted. When the one burst data has not been transmitted (No in S98), the burst management module 135 performs the processing of steps S95 to S97. On the other hand, when the burst data has become empty (Yes in S98), the burst management module 135 ends the processing.

As described above, the communication control apparatus 100 in the third embodiment divides burst data, which is to be transmitted within a transmission cycle st, into a plurality of data according to an allowable burst size, and transmits the divided data with a transmission interval gt placed therebetween.

Thus, the communication control apparatus 100 is allowed to reduce the size of unit data to be burst-transmitted within the transmission cycle st, and reduce the occurrence of the overflow of the buffer of the relay apparatus 300.

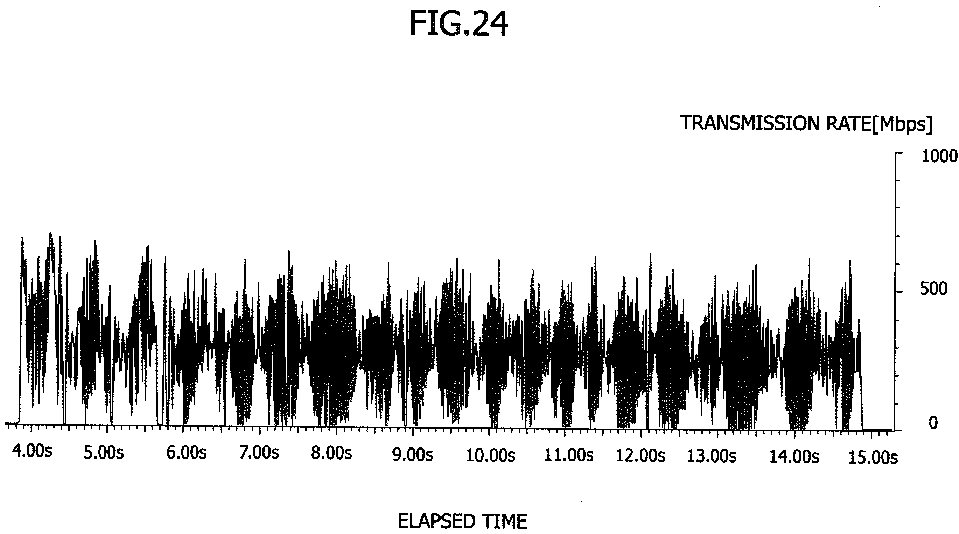

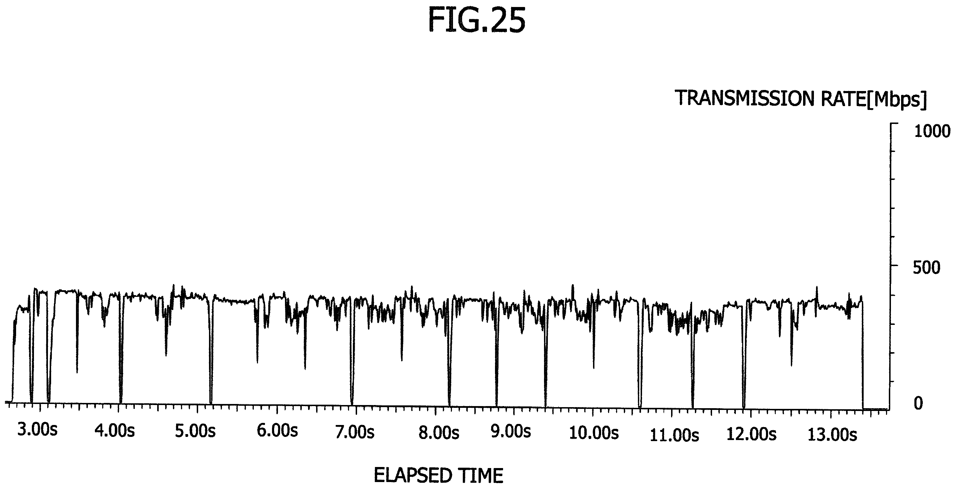

Next, a description will be given, with reference to FIGS. 24 and 25, of the transition of a transmission rate in a case in which burst data is transmitted with a transmission interval placed therebetween within a transmission cycle st.

FIG. 24 is a diagram illustrating the transition of a transmission rate in a case in which burst data is transmitted for each transmission cycle st. In FIG. 24, a horizontal axis indicates the elapse of a time, and a vertical axis indicates a transmission rate (Mbps) in units of "10 ms." FIG. 24 illustrates the transmission rate in a case in which the transmission cycle st is "20 ms" and the transmission rate is "300 Mbps." As illustrated in FIG. 24, the amplitude of the transmission rate obtained when burst data is burst-transmitted for each transmission cycle st is great.

FIG. 25 is a diagram illustrating the transition of a transmission rate obtained when burst data is divided and transmitted for each transmission cycle st. In FIG. 25, a vertical axis and a horizontal axis are the same as those of FIG. 24. Like FIG. 24, FIG. 25 illustrates the transmission rate in a case in which the transmission cycle st is "20 ms" and the transmission rate is "300 Mbps." Further, in FIG. 25, an allowable burst size is "30 KB."

When divided data is transmitted with a transmission interval placed therebetween within the transmission cycle st, the size of unit data to be burst-transmitted reduces in the example of FIG. 24. Therefore, in the example of FIG. 24, the amplitude of the transmission rate in units of "10 ms" reduces, whereby the transmission rate is smoothened. Thus, it becomes possible to reduce the occurrence of the overflow of the buffer of the relay apparatus 300. Accordingly, a reduction in a degree to which the loss of packets occurs is made possible, and throughput is improved.

Note that in FIG. 24, average throughput is "76 Mbps." On the other hand, in FIG. 25, average throughput is "253 Mbps." As described above, since the transmission of burst data in a divided manner reduces the occurrence of the loss of packets, the throughput is tripled.

Note that the communication control apparatus 100 may divide the burst data into data of a size (for example, 20 KB) smaller than an allowable burst size and transmit the divided data for each interval shorter than the transmission interval calculated in step S93 (FIG. 23). In other words, a data size at which burst data is divided may be smaller than a size determined based on the reception state of packets in the client apparatus 200 that is the transmission destination of data, and a transmission interval may be shorter than a time determined based on the number of divided data and a transmission cycle.

Thus, the communication control apparatus 100 burst-transmits divided data of a size (for example, 20 KB) smaller than an allowable burst size (for example, 30 KB) within a transmission cycle st for each shorter transmission interval. For example, the communication control apparatus 100 is allowed to insert a short transmission interval by executing a sleep function with a specified time "0." Thus, the communication control apparatus 100 is allowed to further reduce the size of unit data to be burst-transmitted within a transmission cycle st and more efficiently reduce the occurrence of the overflow of buffers.

### (Fourth Embodiment)

The first to third embodiments exemplify a case in which the communication control apparatus 100 measures a transmission cycle st at the start of a system. On the other hand, a communication control apparatus 100 in a fourth embodiment specifies a transmission cycle st in advance, and acquires the specified transmission cycle st at the activation of a system. Thus, the communication control apparatus 100 is allowed to reduce overhead at the activation of the system.

Further, the third embodiment exemplifies a case in which the communication control apparatus 100 performs the processing to measure an allowable burst size at the start of a session. On the other hand, the communication control apparatus 100 of the fourth embodiment performs processing to measure an allowable burst size at the end of a session. Thus, the communication control apparatus 100 is allowed to reduce the overhead of the processing to measure an allowable burst size at the start of a session.

The hardware configurations of the communication control apparatus 100, a relay apparatus 300, and a client apparatus 200 of the fourth embodiment are the same as those of the third embodiment. Further, the software blocks of the communication control apparatus 100 and the client apparatus 200 are also the same as those of the third embodiment.

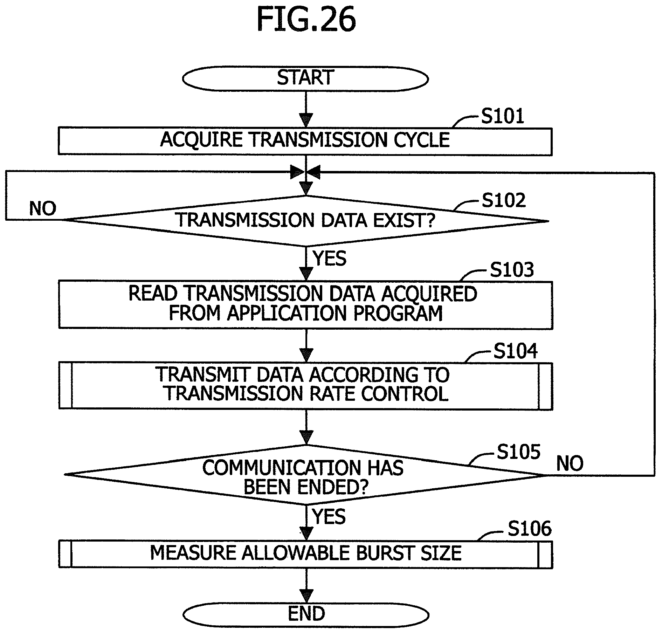

FIG. 26 is a flowchart describing the processing of a communication control program 121 of the communication control apparatus 100 in the fourth embodiment. For example, the communication control apparatus 100 has a specified transmission cycle st for each operation system or for each communication control apparatus 100.

S101: At the activation of a system, a transmission cycle measurement module 132 acquires a transmission cycle st corresponding to the communication control apparatus itself or the operation system of the communication control apparatus 100, and stores the same in a rate control table 122x. The rate control table 122x is the same as that of the third embodiment.

As described above, the transmission cycle measurement module 132 is allowed to omit processing to specify a transmission cycle st at the start of a system and reduce overhead caused by the specifying processing. The processing of steps S102 to S105 is the same as that of steps S53 to S56 of FIG. 16.

S106: When the communication has been ended (Yes in S105), i.e., when the processing to end the communication has been performed, an allowable burst size measurement module 134 performs processing to measure an allowable burst size. The details of the processing of step S106 are described above in step S52 of FIG. 16. After the end of the processing to measure the allowable burst size, the communication control program 121 ends the processing.

As described above, the allowable burst size measurement module 134 determines a first data size (allowable burst size) when ending communication with the reception apparatus (client apparatus) 200. Thus, the allowable burst size measurement module 134 is allowed to reduce overhead at the transmission of data and further improve throughput.

### (Another Embodiment)

Note that the above embodiments exemplify a case in which data is transmitted to the client apparatus 200 according to a TCP. However, the present invention is not limited to the example of the case. The communication control apparatus 100 is allowed to realize the high-accuracy control of a transmission rate even in a case in which data is transmitted to the client apparatus 200, according to a User Datagram Protocol (UDP). Thus, the communication control apparatus 100 is allowed to improve throughput.

### REFERENCE SIGNS LIST

100(100a, 100b): Communication control program, 101: CPU, 102: Memory, 103: Communication interface unit, 106: Bus, 110: Main memory, 111: Auxiliary storage unit, 120: Application program, 121: Communication control program, 122: Rate control table, 200(200a, 200b): Client apparatus

## Claims

1. A non-transitory computer-readable storage medium storing therein a communication control program for causing a computer to execute processing comprising:
executing a prescribed command at a specified transmission cycle;
acquiring a start time at which the execution is started and an end time at which the execution is ended;
performing the execution and the acquisition while changing the transmission cycle; and
specifying a transmission cycle at which an error between a difference between the end time and the start time and the specified transmission cycle is within a prescribed range.

2. The non-transitory computer-readable storage medium storing therein the communication control program for causing the computer to execute the processing according to claim 1, the processing further comprising:
transmitting data of an amount corresponding to a transmission rate every time the transmission cycle is repeated.

3. The non-transitory computer-readable storage medium storing therein the communication control program for causing the computer to execute the processing according to claim 1, wherein
the specification includes making a determination as to whether the error is within the prescribed range, performing the execution and the acquisition while changing the transmission cycle when the error is not within the prescribed range, and determining the transmission cycle when the error is within the prescribed range.

4. The non-transitory computer-readable storage medium storing therein the communication control program for causing the computer to execute the processing according to claim 1, wherein
the specification includes specifying the specified transmission cycle as the transmission cycle at which the error is within the prescribed range when the error is a first threshold or less.

5. The non-transitory computer-readable storage medium storing therein the communication control program for causing the computer to execute the processing according to claim 1, wherein
the specification includes specifying the specified transmission cycle as the transmission cycle at which the error is within the prescribed range when a ratio of the error to the specified transmission cycle is a second threshold or less.

6. The non-transitory computer-readable storage medium storing therein the communication control program for causing the computer to execute the processing according to claim 1, wherein
the prescribed command includes a command to perform prescribed processing for a specified time.

7. The non-transitory computer-readable storage medium storing therein the communication control program for causing the computer to execute the processing according to claim 2, wherein
the transmission includes dividing the data of the amount corresponding to the transmission rate into a plurality of data according to a first size and transmitting the divided data with a transmission interval placed therebetween.

8. The non-transitory computer-readable storage medium storing therein the communication control program for causing the computer to execute the processing according to claim 7, wherein
the transmission includes determining the first size based on a reception state of packets in a reception apparatus representing a transmission destination of the data.

9. The non-transitory computer-readable storage medium storing therein the communication control program for causing the computer to execute the processing according to claim 8, wherein
the reception state of the packets includes a size of a group the packets at which loss of the packets does not occur.

10. The non-transitory computer-readable storage medium storing therein the communication control program for causing the computer to execute the processing according to claim 8, wherein
the reception state of the packets includes a size of a group of the packets at which a transmission rate for the reception apparatus and a reception rate in the reception apparatus match each other.

11. The non-transitory computer-readable storage medium storing therein the communication control program for causing the computer to execute the processing according to claim 7, wherein
the first size is less than a size determined based on the reception state of packets in the reception apparatus representing the transmission destination of the data, and
the transmission interval is shorter than a time determined based on the number of the divided data and the transmission cycle.

12. A communication control method comprising:
executing a prescribed command at a specified transmission cycle;
acquiring a start time at which the execution is started and an end time at which the execution is ended;
performing the execution and the acquisition while changing the transmission cycle; and
specifying a transmission cycle at which an error between a difference between the end time and the start time and the specified transmission cycle is within a prescribed range.

13. A communication control apparatus comprising:
an execution unit configured to execute a prescribed command at a specified transmission cycle;
an acquisition unit configured to acquire a start time at which the execution is started and an end time at which the execution is ended;
a performance unit configured to perform the execution and the acquisition while changing the transmission cycle; and
a specific unit configured to specify a transmission cycle at which an error between a difference between the end time and the start time and the specified transmission cycle is within a prescribed range.
